# EUROPEAN PATENT APPLICATION

(11) **EP 4 718 812 A1**
(43) Date of publication of application: **01.04.2026**
(21) Application number: 25205547.0
(22) Date of filing: 30.09.2025
(51) Int. Cl.: H04L 47/283

(54) **IMPROVED FAULT TOLERANCE IN INTERCONNECTION NETWORKS**

(30) Priority: 30.09.2024 US 202418902497
(71) Applicant: Nvidia Corporation, Santa Clara, CA 95051 (US)
(72) Inventor: THORSON, Gregory Michael, Santa Clara, 95051 (US); ABTS, Dennis Charles, Santa Clara, 95051 (US)
(74) Representative: Mathys & Squire

(57) **Abstract**

Apparatuses, systems, and techniques to determine a channel delay time. In at least one embodiment, the channel delay time is used to determine a buffer size and/or a watchdog timer period. In at least one embodiment, if a disruption occurs, the system may route data traffic to a different communication channel to bypass a disruption in a communication channel.

## Description

### TECHNICAL FIELD

At least one embodiment pertains to methods, systems, processors, and/or techniques for measuring channel delay in a network and allocating resources, such as buffer memory, and/or determining watchdog timer parameters, based at least in part on the channel delay. In at least one embodiment, performance (e.g., error recovery) is improved by early detection of network disruptions.

### BACKGROUND

Network topology includes a series of interconnections between endpoints. The interconnections include network devices, such as switch components, routers, etc., that interconnect endpoints and edge devices over connections or channels, sometimes referred to as links. Within the interconnection network, each switch has a number of ports and each ports is connected to a number of communication links. A typical network implementation allocates a buffer for each port with the buffer being equally allocated to the various communication links. This can result in an inefficient utilization of buffer space and a potential waste of resources. It may also delay the discovery of errors in a data transmission that can lead to bottlenecks in traffic flow. Communication within a network can be improved.

### SUMMARY

The invention is defined by the claims. In order to illustrate the invention, aspects and embodiments which may or may not fall within the scope of the claims are described herein.

Apparatuses, systems, and techniques to determine a channel delay time. In at least one embodiment, the channel delay time is used to determine a buffer size and/or a watchdog timer period. In at least one embodiment, if a disruption occurs, the system may route data traffic to a different communication channel to bypass a disruption in a communication channel.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a block diagram of an example system, in accordance with at least one embodiment;
FIG. 2 illustrates a block diagram illustrating a portion of the system illustrated in FIG. 1, in accordance with at least one embodiment;
FIG. 3 illustrates a block diagram illustrating an example data exchange, in accordance with at least one embodiment;
FIG. 4 illustrates a block diagram illustrating example hardware components to perform a data exchange, in accordance with at least one embodiment;
FIG. 5 illustrates a block diagram illustrating an example network configuration, in accordance with at least one embodiment;
FIG. 6 illustrates a flow chart of a method of determining channel latency, in accordance with at least one embodiment;
FIG. 7 is a flowchart illustrating a process for the detection of a transmission error based on channel latency and error recovery in accordance with one embodiment of the present disclosure;
FIG. 8A illustrates an example of a system that includes a driver and/or runtime including one or more libraries to provide one or more application programming interfaces (APIs), in accordance with at least one embodiment;
FIG. 8B is block diagram illustrating an example of a processor and modules, according to at least one embodiment;
FIG. 9A illustrates logic, according to at least one embodiment;
FIG. 9B illustrates logic, according to at least one embodiment;
FIG. 10 illustrates an example data center system, according to at least one embodiment; and
FIG. 11 is a block diagram illustrating a computer system, according to at least one embodiment.

### DETAILED DESCRIPTION

Within a data center or other multi-computing device environment or system, multiple computing devices (e.g., servers) may be connected together to form a network. In at least one embodiment, the network may connect multiple computing devices to form a computing system, and/or multiple computing systems within the data center. One or more of the computing devices and/or one or more of the computing systems may be physically located at different distances from other ones of the computing devices and/or other ones of the computing systems. For example, one or more of the computing devices and/or one or more of the computing systems may be located in a different building or other location from other ones of the computing devices and/or other ones of the computing systems. The network may include one or more devices, such as switches, routers, hubs, repeaters, bridges, gateways, and/or firewalls, that route data traffic on the network to and from one or more of the computing devices. Disruptions within the network can have negative impacts on the functioning of the computing devices.

One way for a network to adapt quickly to a network disruption (e.g., a fault, a disconnection, an error, interference, corrupted packets, a software error, a hardware failure, a power outage, bad cable connector, disruption caused by a malicious actor, a configuration error, damaged line, damaged wireless transmitter, damaged wireless receiver, network congestion, etc.) is to "adaptively detour" network traffic around the network disruption to prevent such events from stopping or slowing progress with respect to a workload. In particular, it is beneficial to avoid or detour around network disruptions that negatively affect workloads that require large compute capacity for sustained periods of uninterrupted computation (e.g., spanning days and/or weeks). Non-limiting examples of such workloads include artificial intelligence (AI) workloads (e.g., one or more neural networks, one or more Large Language Models, and/or one or more other machine learning processes).

In addition to routing network traffic to avoid network disruptions, network traffic may be routed to improve network throughput. An individual network device (e.g., a computing device, a computing system, a switch, a router, a hub, a repeater, a bridge, a gateway, a firewall, etc.) may determine a channel delay or latency between that network device and any other network devices connected directly to the network device. The network device may use the channel latency to improve network performance (e.g., reliability, throughput, etc.). The network device may occasionally (e.g., periodically) recalculate such channel latency(ies) to modify network performance.

A network device described herein may use channel latency to allocate memory space (e.g., per virtual channel) used to store transient data packets. A network device described herein may use channel latency to configure a watchdog timer associated with a port to expire after a duration based at least in part on the channel latency. For example, the network device may configure the watchdog timer to expire if more than an amount of time equal to the channel latency expires after the network device sends a packet over the channel. If the watchdog timer expires, the network device (e.g., an output port of the network device) may declare the packet as being "lost or corrupt" and/or may initiate a physical link retransmission. If the watchdog timer expires, the watchdog timer may generate an expire signal. A network device may act upon the expiry signal and detour packets to adapt traffic around the channel (e.g., that experienced a fault).

A sender network device may label each packet with a unique sequence identifier that may be used by a receiver network device to track all received packets. When a packet is corrupted, or a sequence identifier is received out of order, the receiver network device may discard one or more errant packets received until a packet containing the expected sequence identifier is successfully received. This is commonly referred to as a "sliding window go-back-N" reliable transmission protocol since the sender network device has to retransmit one or more packets starting at the last known good packet received. Link-layer packet retry is method that causes a link layer to retransmit a packet until it is correctly received and acknowledged. Both sliding window go-back-N and link-layer packet retry can induce and/or increase transient congestion in the network and/or prevent the sender network device from sending new traffic while it sends the missing packets. By detecting a network disruption quickly, any retransmissions can be started sooner, which can reduce the number of packets resent and/or the number of resends to remediate and/or mask (hide) the network disruption (e.g., a fault) and/or reduce a mean time to repair (MTTR). Reducing MTTR may be beneficial as the size of the system grows and/or includes a large number of processors.

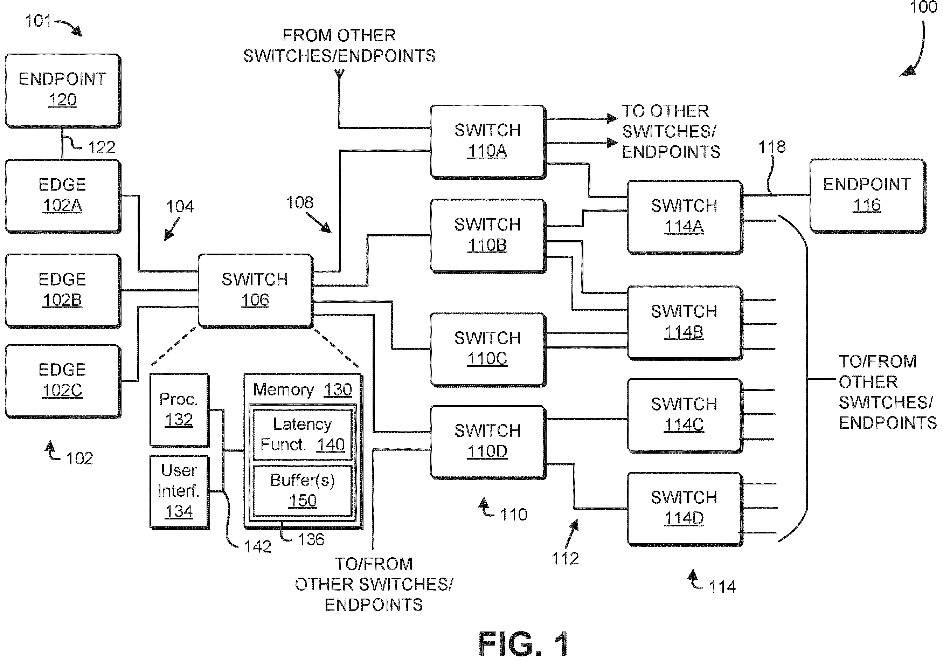

FIG. 1 illustrates a block diagram of an example system 100, in accordance with at least one embodiment. In at least one embodiment, the system 100 implements at least a portion of a network to communicate data between different network devices 101. FIG. 1 illustrates an example network topology including the network devices 101. The network devices 101 may include one or more computing devices, one or more computing systems, one or more switches, one or more routers, one or more hubs, one or more repeaters, one or more bridges, one or more gateways, one or more firewalls, and/or one or more other types of network device.

In at least one embodiment, the network connects different network devices within a data center. In at least one embodiment, the network may connect multiple ones of the network devices 101, including computing devices, to form one or more computing systems or subsystems within the data center, and/or the network may connect multiple computing systems or subsystems together within the data center. One or more of the computing devices and/or one or more of the computing systems may be physically located at different distances from other ones of the computing devices and/or other ones of the computing systems.

A data center may include a large number of computing devices that are connected by a plurality of interconnection devices (e.g., routers and switches) to form a network. The data center may be contained in a single building (e.g., onsite data centers), in a group of nearby buildings, such as data center campus, or spread over a great distance, such as cloud-based data centers). In each of these examples, the distances between the computing devices can vary significantly.

In at least one embodiment, the network devices 101 include one or more edge devices 102 (e.g., edge elements 102A-102C), one or more switches 106, one or more switches 110, one or more switches 114, and/or one or more endpoints (e.g., endpoints 116 and 120). In at least one embodiment, the network devices 101 of the system 100 include a plurality of edge devices (referred to as edge elements) 102A-102C, which may be referred to as network access points. The edge elements 102A-102C may serve as entry points to the network for a service provider, an organization, and/or as part of a data center. Although not illustrated in FIG. 1, the edge elements 102A-102C may include components, such as firewalls and/or other network security components. In at least one embodiment, the system 100 implements dynamic credit and/or buffer provisioning to achieve fault tolerance in an interconnection network.

In the example of FIG. 1, the edge elements 102A-102C connect to the switch 106 via communication channels 104 (e.g., wired and/or wireless connections or links). The switch 106, in turn, connects to a plurality of switches 110A-110D via a plurality of communication channels 108 (e.g., wired and/or wireless connections or links). In at least one embodiment, the switches 110A-110D connect to other switches in the system 100. For example, the switch 110B connects to switches 114A-114B via communication channels 112 (e.g., wired and/or wireless connections or links). Each connection between switches (e.g., one of the communication channels 108 between the switch 106 and the switch 110A) is considered a "hop" as data is passed from one of the network devices 101 to an adjacent one of the network devices 101. For each hop, one device (e.g., the switch 106) has at least one transmitter that sends data to at least one receiver in the downstream device (e.g., the switch 110A) at the other end of the hop. This process is repeated throughout the network until the data arrives at its intended destination.

The intended destination for a data message is referred to as an endpoint device (referred to as an endpoint), such as an endpoint 116 coupled to switch 114A by a communication channel 118. In at least one embodiment, the system 100 may include an endpoint 120 coupled to the edge element 102A via a communication channel 122 (e.g., a wired and/or wireless connection or link). The edge elements 102A-102C may each function as a network access point for one or more endpoints (e.g., one or more computing devices, one or more gateway devices, one or more firewall devices, one or more mobile devices, and/or one or more other types of devices). The edge elements 102A-102C may be connected to one or more endpoint devices via wired and/or wireless connections. In FIG. 1, the edge element 102A functions as a network access point for the endpoint 120, and the switch 114A functions as an edge element providing a network access point for the endpoint 116.

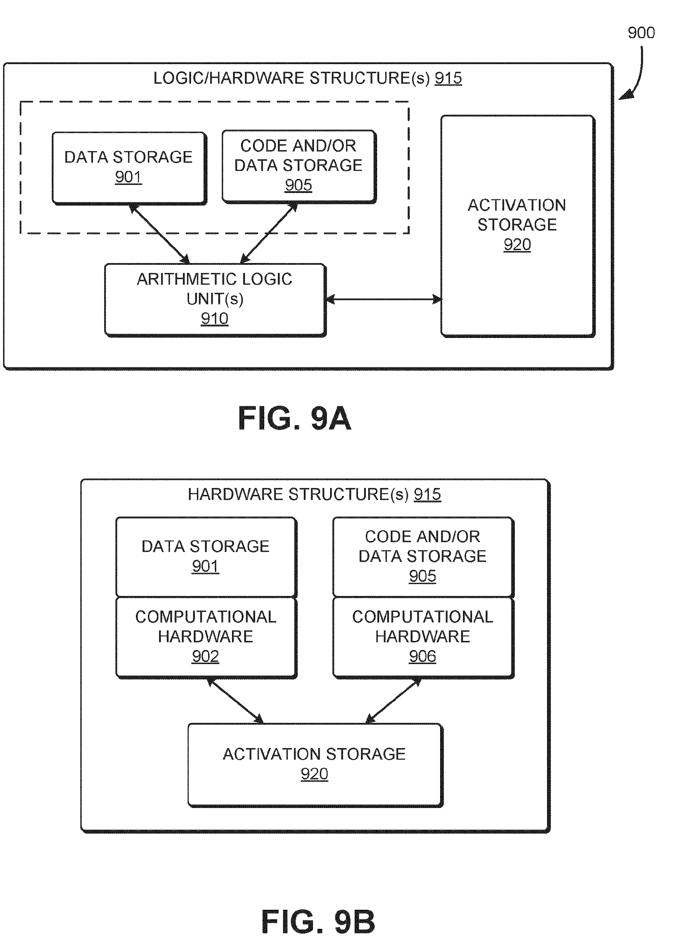

In at least one embodiment, at least a portion of the network devices 101 each include memory 130, one or more processors 132, and a user interface 134. The memory 130 (e.g., one or more non-transitory processor-readable medium) may store processor executable instructions 136 that when executed by the processor(s) 132 implement latency functionality 140, and/or the like. By way of additional non-limiting examples, the memory 130 (e.g., one or more non-transitory processor-readable medium) may be implemented, for example, using volatile memory (e.g., dynamic random-access memory ("DRAM")) and/or nonvolatile memory (e.g., a hard drive, a solid-state device ("SSD"), and/or the like). In at least one embodiment, at least a portion of the memory 130 is implemented using at least a portion of any system(s) depicted in and/or described with respect to FIGS. 9A-11. In at least one embodiment, at least a portion of the memory 130 is used to implement at least a portion of any system(s) depicted in and/or described with respect to FIGS. 9A-11.

The processor(s) 132 may include one or more circuits that perform at least a portion of the instructions 136 stored in the memory 130. The processor(s) 132 may include one or more parallel processing units ("PPU(s)"), such as one or more graphics processing units ("GPU(s)"), one or more massively parallel GPU(s), and/or the like. In at least one embodiment, massively parallel GPU(s) refer to a collection of one or more GPUs, or any suitable processing units, which may be utilized to perform various processes in parallel. The processor(s) 132 may be implemented, for example, using a main central processing unit ("CPU") complex, one or more microprocessors, one or more microcontrollers, the PPU(s) (e.g., GPU(s)), one or more data processing units ("DPU(s)"), one or more arithmetic logic units ("ALU(s)"), and/or the like. In at least one embodiment, at least a portion of the processor(s) 132 is implemented using at least a portion of any system(s) depicted in and/or described with respect to FIGS. 9A-11. In at least one embodiment, at least a portion of the processor(s) 132 is used to implement at least a portion of any system(s) depicted in and/or described with respect to FIGS. 9A-11.

The user interface 134 may include a display device (not shown) that a user may use to view information generated and/or displayed by the network device. The user may use the user interface 134 to enter user input into the network device. The user interface 134 may communicate (e.g., wirelessly) with a user device (e.g., a cellular telephone, a laptop computer, a tablet, and/or the like) and may receive user input from the user device. In at least one embodiment, at least a portion of the user interface 134 is implemented using at least a portion of any system(s) depicted in and/or described with respect to FIGS. 9A-11. In at least one embodiment, at least a portion of the user interface 134 is used to implement at least a portion of any system(s) depicted in and/or described with respect to FIGS. 9A-11.

The memory 130, the processor(s) 132, and/or the user interface 134 may communicate with one another over one or more connections 142, such as a bus, a Peripheral Component Interconnect Express ("PCIe") connection (or bus), and/or the like. In at least one embodiment, at least a portion of the connection(s) 142 is implemented using at least a portion of any system(s) depicted in and/or described with respect to FIGS. 9A-11. In at least one embodiment, at least a portion of the connection(s) 142 is used to implement at least a portion of any system(s) depicted in and/or described with respect to FIGS. 9A-11.

In the example embodiment of FIG. 1, data may be transmitted from the endpoint 120 to the endpoint 116 through selected network components (e.g., a portion of the network devices 101) of the system 100. In this example, the endpoint 120 is coupled to the edge element 102A, which in turn is coupled to the switch 106. From the switch 106, the data may be delivered to the endpoint 116 via either (or both) the switches 110A and 110B and the switch 114A.

In at least one embodiment, each of the network devices 101 include one or more pairs of ports associated with buffers 150. Each pair includes an output port and an input port, and the buffers 150 may include an output buffer for each output port and an input buffer for each input port. The buffers 150 may be implemented in a shared centralized memory that is shared by two or more of the ports of one of the network devices 101. The shared centralized memory may be divided into the buffers 150 (e.g., implemented as "virtual channels") each allocated dedicated buffer space. A sender one of the network devices 101 may use one of its output ports to send one or more packets stored in a corresponding output buffer to another recipient one of the network devices 101 over a communication channel (e.g., a wired and/or wireless connection or link). The packet(s) are received by the input buffer of the recipient network device and stored in a corresponding input buffer. The recipient network device may remove the packet(s) from the input buffer and send an acknowledgement signal to the sender network device indicating that the recipient network device may receive one or more additional packets. The packet(s) may remain in memory structures of the sender network device (e.g., the output buffer) until the acknowledgement signal is received by the sender network device. While the packet(s) wait, they are referred to as in-flight packets.

In at least one embodiment, output ports of the switches (e.g., the switch 110B) are connected to input ports of other switches (e.g., the switches 114A-114B) in the system 100, for example via data cables or other types of channels or connections (e.g., one or more wireless connections). If the switches are interconnected using data cables, the data cables may be different lengths because of the physical location of the switches. For example, the data cable connecting the switch 110B to the switch 114A may have one length (e.g., one meter) while the data cable connecting the switch 110B to the switch 114B may have a different length (e.g., 100 meters). This difference in length may cause propagation delay between the switch 110B and the switch 114B to be different from (e.g., 100 times) the propagation delay between the switch 110B and the switch 114A (e.g., 100 meters vs. 1 meter). Differences in channel latency may be caused by differences in the channels, such as differences in physical channel lengths, differences in types of transmission media, differences in bandwidth, and/or other differences. Differences in channel latency may be caused by delays or congestion at the sender device, delays or congestion at the receiver device, network settings (e.g., quality of service settings), software delays (e.g., firewall software and/or antivirus software), protocol overhead, and/or other causes.

In at least one embodiment, at least a portion of the network devices 101 of the system 100 may each use the latency functionality 140 to estimate or determine an accurate measurement of channel latency with respect to any channel(s) connected to the network device. The channel latency is considered to be the time from an initial transmission of data from a first network element (e.g., the switch 110B) to the time that the first network element (e.g., the switch 110B) receives an acknowledgement from a second network element to which the initial data transmission was directed (e.g., the switch 114A).

For example, the switch 110B may use the latency functionality 140 (e.g., stored in the memory 130 and performed by the processor(s) 132 of the switch 110B) to determine a first channel latency of the channel between the switch 110B and the switch 114A and a second channel latency of the channel between the switch 110B and the switch 114B. In at least one embodiment, the buffer(s) 150 of the switch 110B include(s) a first output buffer associated with a first output port of the switch 110B and a connection to an input port of the switch 114A. Similarly, the buffer(s) 150 of the switch 110B includes a second output buffer associated with a second output port of the switch 110B and a connection to an input port of the switch 114B. Because the latency functionality 140 is capable of determining the first and second channel latencies, the switch 110B can customize the buffer size (e.g., of the first and second output buffers) based at least in part on those channel latencies. In the present example, the second output buffer, which is associated with the second output port of the switch 110B and the connection to the input port of the switch 114B may be 100 times larger than the first output buffer associated with the first output port of the switch 110B and the connection to the input port of the switch 114A.

In at least one embodiment, the processor(s) 132 of at least a portion of the network devices 101 (e.g., the endpoints 116 and 120) may each include one or more CPU(s), one or more GPU(s), one or more PPU(s), one or more accelerators, one or more microprocessors, one or more microcontrollers, one or more controllers, one or more digital signal processors, one or more DPU(s), one or more other types of processors, one or more virtual machines (e.g., managed by a hypervisor), one or more remote processing units (e.g., by one or more networks and a network interface), and/or one or more other types of devices (e.g., one or more communication devices and/or interfaces) that may be connected to the communication channel 118 and/or the communication channel 122. As the scale of the system 100 increases, the number of processors in the system 100 may increase and/or the reliability of the system 100 may potentially decrease proportionally.

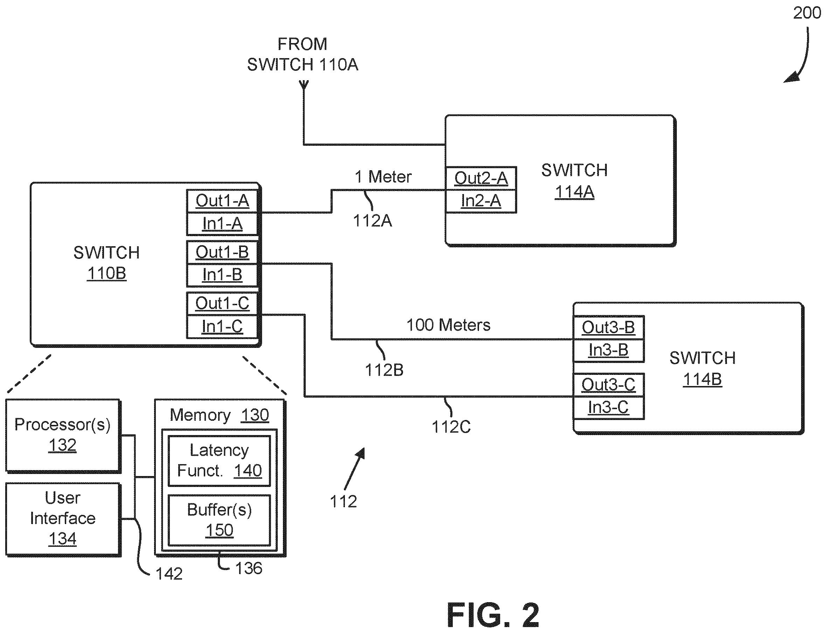

FIG. 2 illustrates a block diagram illustrating a portion of the system 100 illustrated in FIG. 1, in accordance with at least one embodiment. Specifically, FIG. 2 illustrates the switch 110B, the switches 114A-114B, and the communication channels 112 extending therebetween. FIG. 2 illustrates a communication channel 112A extending between the switch 110B and the switch 114A and multiple communication channels 112B and 112C between the switch 110B and the switch 114B. Each of the plurality of communication channels 112A-112C is part of a first hop between the switch 110B and the switch 114A or a first hop between the switch 110B and the switch 114B.

The switch 110B includes a pair of ports for each of the communication channels 112A-112C. Each pair of ports includes an output port and an input port for communicating data over a channel. For example, the switch 110B includes output port Out1-A to transmit data (e.g., packets) to input port In2-A of the switch 114A over the communication channel 112A, output port Out1-B to transmit data to input port In3-B of the switch 114B over the communication channel 112B, and output port Out1-C to transmit data to input port In3-C of the switch 114B over the communication channel 112C. Similarly, the switch 114A includes output port Out2-A to transmit data (e.g., packets) to input port In1-A of the switch 110B over the communication channel 112A, the switch 114B includes output port Out3-B to transmit data to input port In1-B of the switch 110B over the communication channel 112B, and the switch 114B includes output port Out3-C to transmit data to input port In1-C of the switch 110B over the communication channel 112C.

FIG. 2 illustrates data cables implementing the communication channels 112A and 112B and connecting the output ports Out1-A and Out1-B of the switch 110B to the input port In2-A of switch 114A and the input port In3-B of switch 114B, respectively. Using the example of FIG. 1, FIG. 2 illustrates different cable lengths of the data cables between the switch 110B and the switch 114A (one meter) and between the switch 110B and the switch 114B (100 meters). As discussed, in this example, the channel latency of the communication channel 112B between the switch 110B and the switch 114B may be approximately 100 times the channel latency of the communication channel 112A between the switch 110B and the switch 114A due to the different cable lengths (e.g., 100 meters v. one meter). Each of the input and output ports may be associated with one of the buffer(s) 150. Accordingly, the latency functionality 140 (e.g., if performed by the processor(s) 132 of the switch 110B) can allocate a first output buffer size for the output buffer Out1-A connecting the output port of the switch 110B to the input port In2-A of the switch 114A and allocate a second output buffer size for the output buffer connecting the output port Out1-B of the switch 110B to the input port In3-B of switch 114B where the second output buffer size is 100 times large than the first output buffer size due to the greater channel latency of the communication channel 112B between the switch 110B and the switch 114B. In at least one embodiment, the latency functionality 140 (e.g., if performed by the processor(s) 132 of the switch 114A) may allocate an output buffer size for the output buffer Out1-C based at least in part on channel latency measured over the communication channel 112C. In at least one embodiment, the latency functionality 140 (e.g., if performed by the processor(s) 132 of the switch 114A) may allocate an input buffer size for the input buffer In1-A based at least in part on channel latency measured over the communication channel 112A, an input buffer size for the input buffer In1-B based at least in part on channel latency measured over the communication channel 112B, and an input buffer size for the input buffer In1-C based at least in part on channel latency measured over the communication channel 112C.

In at least one embodiment, the latency functionality 140 (e.g., if performed by the processor(s) 132 of the switch 114A) can allocate an output buffer size for the input buffer Out2-A based at least in part on a channel latency measured with respect to the communication channel 112A and/or an input buffer size for the input buffer In2-A based at least in part on a channel latency measured with respect to the communication channel 112A. In at least one embodiment, the latency functionality 140 (e.g., if performed by the processor(s) 132 of the switch 114B) can allocate an output buffer size for the input buffer Out3-B based at least in part on a channel latency measured with respect to the communication channel 112B and/or an input buffer size for the input buffer In3-B based at least in part on a channel latency measured with respect to the communication channel 112B. In at least one embodiment, the latency functionality 140 (e.g., if performed by the processor(s) 132 of the switch 114B) can allocate an output buffer size for the input buffer Out3-C based at least in part on a channel latency measured with respect to the communication channel 112C and/or an input buffer size for the input buffer In3-C based at least in part on a channel latency measured with respect to the communication channel 112C.

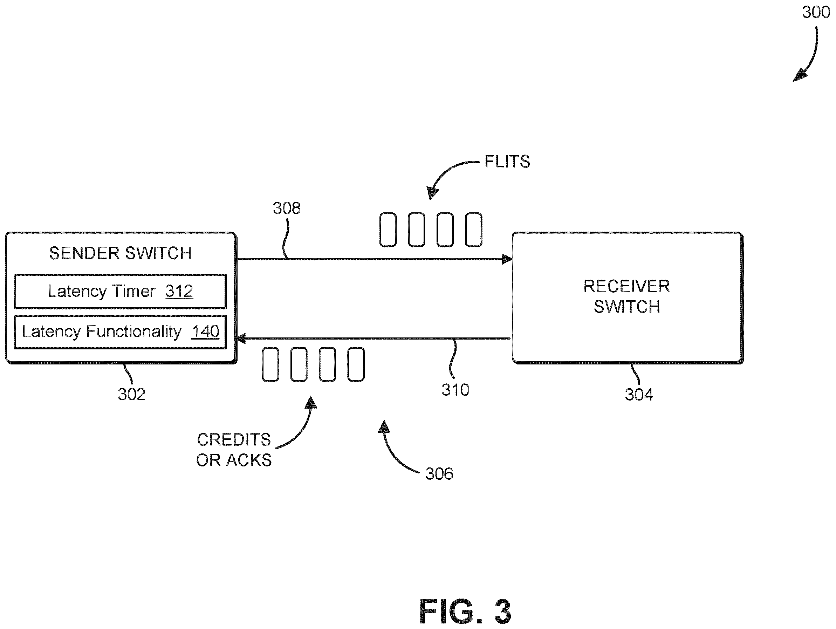

FIG. 3 illustrates a block diagram illustrating an example data exchange 300, in accordance with at least one embodiment. The data exchange 300 may occur over a single hop between a sender switch 302 (e.g., the switch 110B) and a receiver switch 304 (e.g., the switch 114B) via a bidirectional communication channel 306. The sender switch 302 and the receiver switch 304 may each be implemented using any of the network devices 101 of FIG. 1. In at least one embodiment, the bidirectional communication channel 306 includes two separate unidirectional communication channels 308 and 310 with data flowing in a first direction on the communication channel 308 and in an opposite second direction on the communication channel 310. Thus, data flows in opposite directions on the two unidirectional communication channels 308 and 310.

The sender switch 302 may send at least a portion of a message as data packets, referred to as flow control units (flits), to the receiver switch 304 along a forward communication channel, which is the communication channel 308 in FIG. 3. As discussed above, the sender switch 302 (e.g., the switch 110B) has an output buffer associated with the data channel 308 over which the sender switch 302 sends data to the receiver switch 304 (e.g., the switch 114B). The latency functionality 140 (e.g., if performed by the processor(s) 132 of the sender switch 302) may determine a buffer size for an output buffer of the sender switch 302 based at least in part on measured channel latency, which may be determined based at least in part on the length of the data cable connecting the sender switch 302 to the receiver switch 304 and/or one or more other causes of channel latency such as one or more of those mentioned herein. Using the example of FIGS. 1-2, the output buffer may have a buffer size allocated based at least in part on measured channel latency, which may be determined based at least in part on the length (e.g., 100 meters) of the data cable connecting the sender switch 302 (e.g., the switch 110B) to the receiver switch 304 (e.g., the switch 114B). In contrast, the output buffer size may be smaller due to a shorter length (e.g., one meter) of a data cable connecting the sender switch 302 (e.g., the switch 110B) to a different receiver switch (e.g., the switch 114A).

In at least one embodiment, the latency functionality 140 (e.g., if performed by the processor(s) 132 of the receiver switch 304) may determine a buffer size for the input buffer of the receiver switch 304 based at least in part on measured channel latency, which may be determined based at least in part on the length of the data cable connecting the sender switch 302 to the receiver switch 304 and/or one or more other causes of channel latency such as one or more of those mentioned herein.

As the incoming packets are processed by the receiver switch 304 (e.g., removed from the input buffer), a "credit" or acknowledgment (ACK) signal is sent from the receiver switch 304 to the sender switch 302 along a reverse communication channel, which is illustrated as the communication channel 310 in FIG. 3. The acknowledgment signal tells the sender switch 302 that the receiver switch 304 has successfully received the previously sent flits and is ready to receive additional flits. Absent a transmission error, the transmission of data packets (e.g., as flits) and receipt of acknowledgement signals continues until the entire message has been transmitted by the sender switch 302 and received by the receiver switch 304.

In at least one embodiment, the latency functionality 140, if performed by the processor(s) 132 of one of the network devices 101 causes the network device to perform an initialization and training process. In at least one embodiment, the initialization and training process uses a latency timer 312 to measure the channel latency between the sender switch 302 (e.g., the switch 110B) and the receiver switch 304 (e.g., the switch 114B). The latency functionality 140 may start the latency timer 312 when a data packet is sent from the sender switch 302 to the receiver switch 304. In at least one embodiment, that data packet used to measure the channel latency is a short probe data packet. The latency functionality 140 may stop the latency timer 312 when the sender switch 302 receives a credit/acknowledgement signal from the receiver switch 304 indicating that the data packet has been successfully received by the receiver switch 304.

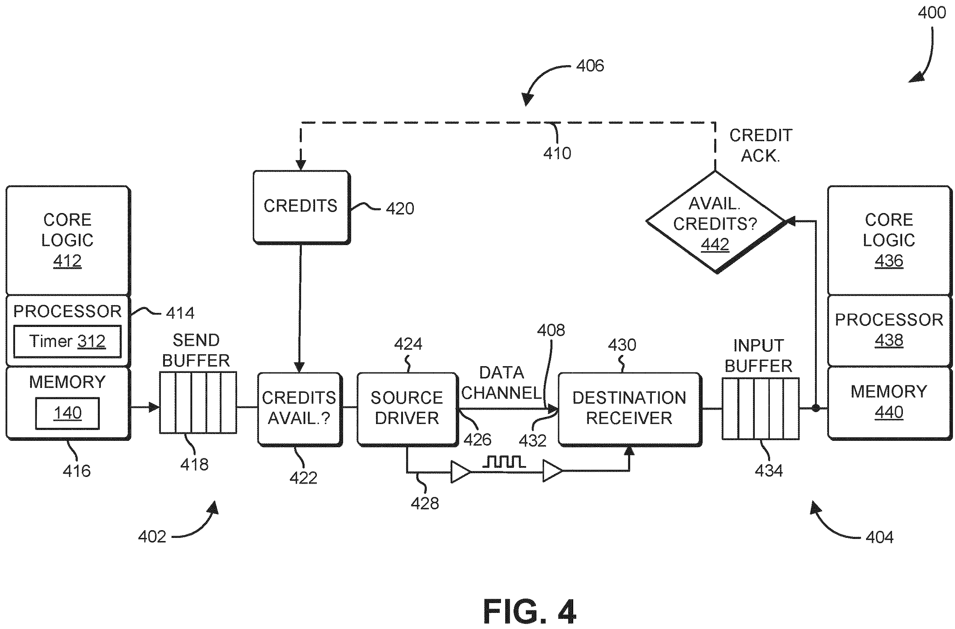

FIG. 4 illustrates a block diagram illustrating example hardware components to perform a data exchange 400, in accordance with at least one embodiment. In at least one embodiment, the data exchange 400 occurs over a single hop between a source device 402 and a destination device 404 via a bidirectional communication channel 406. In at last one embodiment, the data exchange 400 is performed for each output port of each network element or network device so that the latency functionality 140 may calculate the channel latency of each data hop individually and individually allocate a buffer size for each output port based, at least in part, on the channel latency associated with the respective output port.

The source device 402 and the destination device 404 may each be implemented using any of the network devices 101 (see FIG. 1). For example, the source device 402 can be implemented by a switch (e.g., the switch 110B), an endpoint (e.g., the endpoint 120), an edge element (e.g., the edge element 102A), a network interface controller, a router, and/or another network component. Similarly, the destination device 404 can be implemented by a switch (e.g., the switch 114A), an endpoint (e.g., the endpoint 116), an edge element (e.g., the edge element 102B), a network interface controller, a router, and/or another network component.

In at least one embodiment, the bidirectional communication channel 406 is implemented using one or more of the channels 104, 108, 112, 118, or 122 (see FIG. 1). In at least one embodiment, the bidirectional communication channel 406 is implemented using the channel 306 (see FIG. 3). In at least one embodiment, the bidirectional communication channel 406 includes two separate unidirectional communication channels 408 and 410 (e.g., like the channels 308 and 310 illustrated in FIG. 3) with data flowing in a forward direction on the forward communication channels 408 and in an opposite reverse direction on the reverse communication channel 410. Data packets, referred to as flits, are transmitted from the source device 402 to the destination device 404 along the forward communication channel 408. As the incoming packets are processed by the destination device 404, a "credit" or acknowledgment signal is sent from the destination device 404 to the source device 402 along the reverse communication channel 410.

In at least one embodiment, FIG. 4 illustrates multiple layers of abstraction in the Open Systems Interconnection (OSI) model, such as a network layer, a data link layer, and a physical layer. At the network layer, core logic 412 of the source device 402 (e.g., the switch 110B) includes at least one processor 414 connected to memory 416. The core logic 412 may include hardware (e.g., one or more circuits) and/or software to implement the source device 402 and/or perform operations such as at least a portion of those described herein. At the data link layer, a send buffer 418 stores data awaiting transmission. A credits register 420 indicates that buffer space is available within the destination device 404. A control element 422 determines whether a sufficient number of credits are available to send additional data, and waits until a sufficient number of credits are available. When a sufficient number of credits are available, the source device 402 sends data from the send buffer 418 to a source driver 424. At the physical layer, the source driver 424 sends data from an output port 426 of the source device 402 onto the forward communication channel 408 along with a clock signal 428.

In at least one embodiment, the control element 422 and/or the source driver 424 is/are implemented using hardware (e.g., one or more circuits) and/or software. In at least one embodiment, the control element 422 is implemented at least in part by instructions stored in the memory 416 (e.g., a non-transitory computer-readable storage medium) and performed by the processor 414. In at least one embodiment, the source driver 424 is implemented at least in part by instructions stored in the memory 416 and performed by the processor 414. For example, the core logic 412 may implement the control element 422 and/or the source driver 424.

In at least one embodiment, the physical layer of the destination device 404 (e.g., the switch 114A) includes a destination receiver 430 that receives the data and clock signal at an input port 432. The clock signal 428 is recovered and data received by the destination receiver 430. The received data is provided to an input buffer 434 and provided to core logic 436 of the destination device 404. In at least one embodiment, the core logic 436 includes at least one processor 438 connected to memory 440. The core logic 436 may include hardware (e.g., one or more circuits) and/or software to implement the destination device 404 and/or perform operations such as at least a portion of those described herein.

In at least one embodiment, the destination device 404 provides an available credits element 442 (e.g., one or more circuits) to determine whether incoming data has been cleared from the input buffer 434. When incoming data has been cleared from the input buffer 434, the available credits element 442 generates an acknowledgement signal to indicate that the data has been successfully received and that the destination device 404 is ready to receive additional data from the source device 402. The credit acknowledge signal is provided to the credits register 420 in the source device 402 via the reverse communication channel 410. The control element 422 may detect the credit acknowledge signal has been received by the credits register 420 (e.g., by polling the credits register 420) and use the credit acknowledge signal to determine whether a sufficient number of credits are available to send additional data. The control element 422 may wait until a sufficient number of credits are available before sending additional data to the destination device 404.

In at least one embodiment, the available credits element 442 and/or the destination receiver 430 is/are implemented using hardware (e.g., one or more circuits) and/or software. In at least one embodiment, the available credits element 442 is implemented at least in part by instructions stored in the memory 440 (e.g., a non-transitory computer-readable storage medium) and performed by the processor 438. In at least one embodiment, the destination receiver 430 is implemented at least in part by instructions stored in the memory 440 (e.g., a non-transitory computer-readable storage medium) and performed by the processor 438. For example, the core logic 436 may implement the available credits element 442 and/or the destination receiver 430.

In at least one embodiment, the send buffer 418 may include separate data storage elements associated with each output port (e.g., the output port 426) from the source device 402. In at least one embodiment, the send buffer 418 may be part of the memory 416 in the core logic 412 of the source device 402. A switch may have 100 or more ports. In at least one embodiment, the memory 416 in the core logic 412 may be allocated to provide data storage for the send buffers 418 for all of the output ports of the source device 402. In at least one embodiment, a portion of the memory 416 is allocated to serve as the send buffer 418 for each output port.

Similarly, the input buffer 434 may include separate data storage elements associated with each input port (e.g., the input port 432) of the destination device 404. In at least one embodiment, the input buffer 434 may be part of the memory 440 in the core logic 436 of the destination device 404. In at least one embodiment, the memory 440 in the core logic 436 may be allocated to provide data storage for the input buffer 434 for all input ports of the destination device 404. In at least one embodiment, a portion of the memory 440 is allocated to serve as the input buffer 434 for each input port.

A buffer may be assigned to each switch (e.g., the switch 110B) and allocated equally among the plurality of ports available in the switch. As noted, a switch may have 100 or more ports. But this may be an inefficient allocation of buffer space because the operational parameters of the individual communication channels may not be the same. For example, the physical length of the data cables that form the communication channels 112 that connect the switch 110B to the switch 114A and connect the switch 110B to the switch 114B may not be identical. Even within the same physical facility, such as a data center, the physical length of data cables are not identical. For example, with respect to FIG. 2, the physical length of the data cable forming the communication channel 112 between the switch 110B and the switch 114A may be one meter, while the physical length of the data cable forming the communication channel 112 between the switch 110B and the switch 114B may be 100 meters. With equal allocation of the buffer space, the communication channel 112 between the switch 110B and the switch 114A (e.g., one meter) may use only 1% of the buffer space used by the communication channel 112 between the switch 110B and the switch 114B (e.g., 100 meters). Thus, 99% of the buffer space allocated to the communication channel 112 between the switch 110B and the switch 114A (e.g., one meter) may be wasted.

In at least one embodiment, the latency functionality 140 (if performed by the processor 414 of the source device 402) determines channel latency (e.g., delay time between transmission of data from the source device 402 and receipt by the source device 402 of the credit acknowledgement signal from the destination device 404) for each communication link and allocates buffer space accordingly. For example, the latency functionality 140 may determine the size of the send buffer 418. In at least one embodiment, the latency functionality 140 (if performed by the processor 438 of the destination device 404) determines channel latency (e.g., delay time between transmission of data from the destination device 404 and receipt by the destination device 404 of the credit acknowledgement signal from the source device 402) for each communication link and allocates buffer space accordingly. For example, the latency functionality 140, if performed by the destination device 404, may determine the size of the input buffer 434.

In at least one embodiment, the latency functionality 140, if performed by the processor(s) 132 of each of the network devices 101 may measure the channel latency for each hop of each port in each switch. For example, with respect to FIG. 2, the latency functionality 140, if performed by the processor(s) 132 of each of the switches 110B, 114A, and 114B, measures the channel latency for each port connection between the switch 110B and the switch 114A as well as the channel latency for each port connection between the switch 110B and the switch 114B. In at least one embodiment, the latency functionality 140 may determine the channel latency during a channel initialization process performed when the system 100 is powered up and/or as a switch (e.g., the switch 110B) is added to the system 100. Referring to FIG. 4, during the initialization and training process (e.g., performed by the latency functionality 140), each transmission port of the source device 402 (e.g., the sender switch 110B) may issue a probe packet, to which the destination device 404 (e.g., the switch 114A) may promptly reply with an acknowledgement packet that the latency functionality 140 (e.g., being performed by the processor 414 of the source device 402) may use to measure the round trip channel latency.

For example, the latency functionality 140 (e.g., if performed by the processor 414) may cause the source device 402 to send the probe packet and start the latency timer 312 when the source device 402 sends the probe packet. In at least one embodiment, the latency functionality 140 (e.g., if performed by the processor 414) causes the control element 422 to determine whether a sufficient number of credits are available to send the probe packet. When the control element 422 determines a sufficient number of credits are available, the latency functionality 140 (e.g., if performed by the processor 414) may cause the source device 402 to send the probe packet to the destination device 404 over the data channel 408 via the send buffer 418. The latency functionality 140 (e.g., if performed by the processor 414) may cause the source device 402 to stop the latency timer 312 when the credits register 420 receives the credit acknowledgement signal. In at least one embodiment, the latency functionality 140 (e.g., if performed by the processor 414) may cause the processor 414 to monitor (e.g., poll) the credits register 420 to determine when the credit acknowledgement signal is received. In at least one embodiment, the latency functionality 140 (e.g., if performed by the processor 414) causes the control element 422 to notify the processor 414 when the credit acknowledgement signal is received.

In at least one embodiment, the latency timer 312 is implemented using a register in the core logic 412 of the source device 402 that is cleared upon sending the probe packet from the send buffer 418 and incremented every clock cycle of a clock in the core logic 412 until the corresponding acknowledgement signal is received on the reverse channel 410. The register accurately records the number of core clock cycles used to maintain a full throughput across the particular channel (e.g., the channel 112 between the sender switch 110B and the receiver switch 114A).

In at least one embodiment, each output port (e.g., the output port 426) can maintain a counter that reflects average (or alternatively, the maximum) credit acknowledgement delay. While this averaging approach provides a reasonable channel latency measurement, it may be less accurate than using the latency timer 312, for example, implemented as a register to count the number of core clock cycles, to measure an exact zero-load latency after each port is initialized.

Each switch (e.g., the switch 110B) has a number of ports and each port has a number of lanes of unidirectional links to other elements (e.g., the switch 114A) in the system 100. In at least one embodiment, the switch (e.g., the switch 110B) has k ports and each port has a *m* lanes of unidirectional links that each operate at a channel rate of *b.* The aggregate bidirectional throughput *B* of the switch (e.g., the switch 110B) is given by *B*=2*kmb* of total bandwidth. For simplicity, FIG. 1 illustrates switches (e.g., the switch 110B) with a relatively small number of ports. However, switches (e.g., the switch 110B) may be implemented with any number of ports (e.g., including 100 or more ports) including a single port.

In at least one embodiment, the source device 402 (e.g., the switch 110B) uses the memory 416 in the core logic 412 with shared memory space per virtual channel for transient storage of data packets. In at least one embodiment, the data packets are stored in the send buffer 418 until the receipt of the packets are acknowledged by the destination device 404 (e.g., the switch 114A). The core logic 412 must provision the shared memory space across the k output ports. As noted above, a common practice is to divide buffer space uniformly across all ports. However, ports with shorter data cables may use only a fraction of the buffer space used by ports connected to longer data cables.

In at least one embodiment, a network device performs the latency functionality 140 to measure channel latency and use the measured channel latency to precisely allocate the total buffer space, *M,* so each of the k output ports is allocated only the necessary buffer space to maintain full bandwidth. In at least one embodiment, a single unidirectional data channel can transmit data at 200 gigabytes per second (Gb/s). In at least one embodiment, data propagation in a transmission channel is approximately five nanoseconds (ns) per meter. In the example of a 100 meter cable, the propagation delay is one microsecond (2 x 5 ns/m x 100 m) for the round trip of data transmission and credit acknowledgement. In at least one embodiment, a data channel with a cable of 100 meters in length would need to buffer 200 Kbytes while a data channel with a cable of one meter in length would need to buffer only 2 Kbytes. Any additional buffer space allocated to the channel with the one meter data cable length is simply a waste of buffer storage capacity. Allocation of 2 Kbytes of buffer storage permits the data channel of one meter in length to maintain full bandwidth. Similarly, the allocation of 200 Kbytes of buffer storage permits the data channel of 100 meters in length to maintain full bandwidth. Thus, the accurate measurement of channel latency permits customization of buffer space allocation for each channel and each hop in the system 100.

In at least one embodiment, if the latency functionality 140 is performed by the processor(s) 132 of each of the network devices 101, the latency functionality 140 uses a measurement of channel latency to determine a buffer allocation that is customized for each hop throughout the system 100. In addition, the latency functionality 140 may use the channel latency to set a watchdog timer to correspond to an observed (e.g., measured) channel latency for each hop throughout the system 100. Using an appropriate time-out duration for the watchdog timer permits the early detection of errors and allows a quicker recovery of an error. In addition, the early error detection permits the sender switch (e.g., the switch 110B) to steer packets to a detour route through the system 100.

In the examples above, a 100 meter data cable may experience a one microsecond channel delay for the two-way transmission of data and credit acknowledgement while a 10 meter data cable may experience a 100 ns delay. In at least one embodiment where the same buffer space is allocated to each channel irrespective of the actual channel latency, the watchdog timer would be set to the same value of one microsecond. The result is that the hop with the 10 meter data cable wastes 900 ns of time before the watchdog timer expires to indicate a data transmission error.

The processor(s) 414 of the core logic 412 may be implemented using the processor(s) 132 (see FIG. 1). The memory 416 of the core logic 412 may be implemented using the memory 130 (see FIG. 1). The processor(s) 414 may be connected to the memory 416 by one or more connections like the connection(s) 142 (see FIG. 1). The processor(s) 438 of the core logic 436 may be implemented using the processor(s) 132. The memory 440 of the core logic 436 may be implemented using the memory 130. The processor(s) 438 may be connected to the memory 440 by one or more connections like the connection(s) 142.

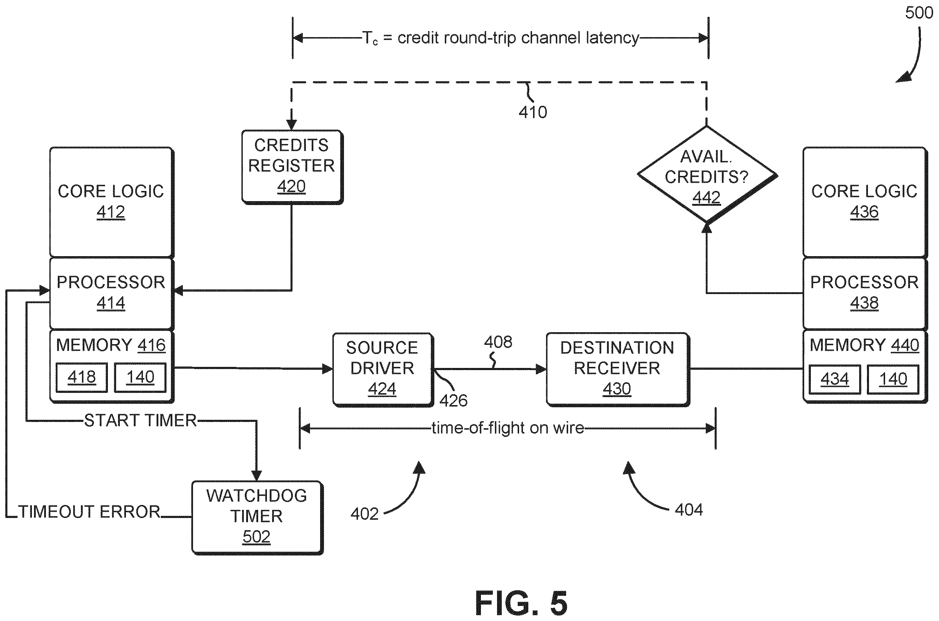

FIG. 5 illustrates a block diagram illustrating an example network configuration 500, in accordance with at least one embodiment. The network configuration 500 may be used to construct a network, such as the network of the system 100, which includes the network devices 101. FIG. 5 illustrates the source device 402 (e.g., a switch of the network devices 101) performing error detection during the exchange of data and control signals between the source device 402 and the destination device 404 (e.g., another switch of the network devices 101). In at least one embodiment, the source device 402 includes or has access to a watchdog timer 502. In at least one embodiment, the network configuration 500 includes the network devices 101, which each include a different watchdog timer 502 customized for each hop (e.g., has a time-out duration determined for a corresponding hop) in the system 100. In the example embodiment of FIG. 5, the memory 416 in the core logic 412 serves as or includes the send buffer 418. When the credits register 420 indicates that the destination device 404 is ready to receive additional data, the processor(s) 414 transfer(s) data from the memory 416 to the source driver 424 for transmission across the data channel 408 to the destination receiver 430. At the same time, the processor(s) 414 may initiate or start the watchdog timer 502.

In at least one embodiment, the input buffer 434 of the destination device 404 is implemented as part of the memory 440. The processor(s) 438 store(s) the incoming data from the destination receiver 430 in the input buffer 434 (e.g., the memory 440). As the incoming data is stored in the memory 440, the processor 438 updates the available credits element 442, which sends the credits/ack signal to the source device 402 on the reverse channel 410. When the credits/ack signal is received by the credits register 420, the processor 414 stops the watchdog timer 502.

If credits/ack signal is received by the source device 402 before the watchdog timer 502 times out, this indicates the transmission was properly received and the watchdog timer 502 can be reset to avoid a false positive error indication. In at least one embodiment, the next packets are released from the send buffer 418 (e.g., the memory 416) for transmission and the watchdog timer 502 is restarted rather than being reset. If the watchdog timer 502 times out before the credits/ack signal is received by the source device 402, this indicate a transmission error has occurred.

In at least one embodiment, the latency functionality 140 (e.g., if performed by the processor 414) may customize the watchdog timer 502 for each hop connected to the source device 402 to permit early detection of an error condition in a particular channel. In at least one embodiment, the latency functionality 140 sets the watchdog timer value of a particular watchdog timer 502 based at least in part on the channel latency (e.g., determined by the latency functionality 140) for a particular corresponding hop in the network. For example, using the sample values provided above, the watchdog timer value of a watchdog timer 502 corresponding to a 100 meter data cable can be set to one microsecond while the watchdog timer value of a watchdog timer 502 corresponding to a 10 meter data cable can be set to 100 ns. With the customized watchdog timer values, the watchdog timer 502 for the 100 meter data cable may wait the appropriate length of time (e.g., one microsecond) for the credit acknowledgment signal to be received by the source device 402. In contrast, in at least one embodiment, the watchdog timer 502 for the 10 meter data cable may wait the appropriate length of time (e.g., 100 ns), but a much shorter time due to the shorter cable length, for the credit acknowledgment signal to be received by the source device 402. Thus, an error in the data transmission in the 10 meter data cable may be detected much earlier than in a system where the watchdog timer 502 is set for a worst-case time for all hops in the network.

The data communication from one endpoint to another may travel through multiple switches. At each hop in the communication pathway, the early failure detection (i.e., fail-fast) provided by the customized timeout setting for each watchdog timer 502 permits faster data recovery in any hop that has failed. In at least one embodiment, the system 100 (see FIG. 1) permits error recovery where the fail-fast early error detection permits a resend of the missing data packet(s) using the same communication channel. The channel latency measurement described herein may be measured for each hop in a network.

In at least one embodiment, a watchdog timer is set with a customized timeout value for each hop in the network. In at least one embodiment, the timeout value is based on the channel latency for the particular hop. When an exception (i.e., a timeout error) is detected, the watchdog timer 502 creates an exception that is signaled in hardware and communicated to software layers using an error status field of the reply packet. In at least one embodiment, the source device 402 can resend the missing data packet using a physical link retry. The data packets are stored in the send buffer 418, which may be part of the memory 416, until the credit acknowledgement is received from the destination device 404. This permits a fast retry using the missing data stored in the hardware memory.

In at least one embodiment, the source device 402 can establish a detour by routing the data to a different output port (and corresponding channel) to thereby bypass a disrupted (e.g., failed) or congested interconnection. In at least one embodiment, each output port (e.g., the output port 426) maintains at least one alternate port selection that is used to steer detoured packets when an error is encountered (e.g., the watchdog timer 502 associated with the port times out before the credits/ack signal is received). In at least one embodiment, at least a portion of the network devices 101 (e.g., the source device 402) can each define multiple detour pathways for each port. The detoured packets egress the alternate port(s) and continue on their detoured path towards the destination endpoint (e.g., the endpoint 116).

In at least one embodiment, the source device 402 can retry sending the missing data *N* times where *N* ≥ 0. In at least one embodiment, the source device 402 can reroute the data to an alternate output port after a single failure without any retries (e.g., *N=* 0), after a single retry (e.g., *N* = 1), or after multiple retries (e.g., *N* > 1). In at least one embodiment, the value of *N* is a parameter set by a system operator based on a desired level of reliability within the system 100. Each switch (e.g., the switch 110B) and endpoint (e.g., the endpoint 120) in the system 100 checks the error status field to detect transmission errors and can resend or reroute missing data to shield an application (e.g., a workload within a data center) from interruption and to maintain interconnection integrity throughout the system 100. For example, if one of the network devices 101 transmitting packets to be used to perform a workload (e.g., an AI workload) detects a transmission error (e.g., the watchdog timer 502 associated with an output port of the network device times out before the credits/ack signal is received by the network device), the network device may transmit or retransmit the packets using a different output port and associated channel to thereby avoid the channel associated with the error.

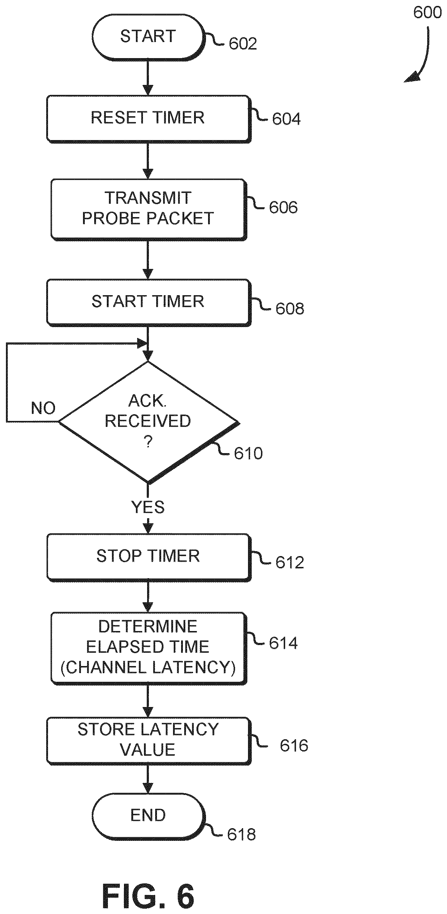

FIG. 6 illustrates a flow chart of a method 600 of determining channel latency, in accordance with at least one embodiment. The method 600 may be used by at least one of the network devices 101 (see FIG. 1) to measure channel latency associated with a channel connected to an output port and/or an input port of the network device. In at least one embodiment, the latency functionality 140 performs the method 600. In at least one embodiment, the latency functionality 140 performs the method 600 when the latency functionality 140 is performed by the processor(s) 414 in the source device 402. In at least one embodiment, at least a portion of the network devices 101 (see FIG. 1) may use the method 600 to measure channel latency. At a start 602, the system 100 is established and a latency may be measured when a new network device, such a switch (e.g., the switch 110B) joins the network of the system 100. In at least one embodiment, the method 600 is used to measure latency for each output port in the new network device. In at least one embodiment, channel latency may be measured for the entire system 100 when performing a system start-up or upon executing a reset. In this event, each of the network devices 101 in the system 100 may use the method 600 to measure the channel latency for each output port in the network device.

In block 604, the sending network device (e.g., the source device 402) resets a timer. For example, one or more processors (e.g., the processor(s) 414 of the source device 402) may cause the sending network device to reset the timer (e.g., the latency timer 312 of the source device 402). In block 606, a sending port of the sending network device (e.g., the output port 426 of the source device 402) transmits a probe data packet to a destination port of a destination network device (e.g., the input port 432 of the destination device 404). For example, the processor(s) (e.g., the processor(s) 414 in the source device 402) may cause the sending port to send the probe data packet to the destination network device.

At block 608, the processor(s) (e.g., the processor(s) 414 in the source device 402) starts the timer (e.g., the latency timer 312 of the source device 402). In at least one embodiment, the timer uses a high speed clock, such as the processor clock (e.g., of at least one of the processor(s) 414) to provide an accurate measure of channel latency. At decision block 610, the processor(s) (e.g., the processor(s) 414 in the source device 402) determines whether the acknowledgement signal has been received from the destination network device (e.g., the destination device 404). If the acknowledgement signal has not been received from the destination network device, the result of decision block 610 is NO, and the processor(s) (e.g., the processor(s) 414 in the source device 402) loops back to decision block 610. If the acknowledgement signal has been received from the destination network device (e.g., the destination device 404), the result of decision block 610 is YES, and in block 612, the processor(s) (e.g., the processor(s) 414 in the source device 402) stops the timer (e.g., the latency timer 312 of the source device 402). In block 614, the processor(s) (e.g., the processor(s) 414 in the source device 402) determines the elapsed time between transmission of the probe data packet from the sending network device (e.g., the source device 402) to the destination network device (e.g., the destination device 404) and the receipt of the credit acknowledgement signal at the sending network device. This value may be used as the channel latency for the specific hop in the network.

In block 616, the processor(s) (e.g., the processor(s) 414 in the source device 402) stores the latency value in association with the specific output port of the specific sending network device (e.g., the output port 426 of the source device 402). In at least one embodiment, the channel latency data may be store in the memory of the sending network device (e.g., the memory 416 of the source device 402). In at least one embodiment, the method 600 ends at block 618.

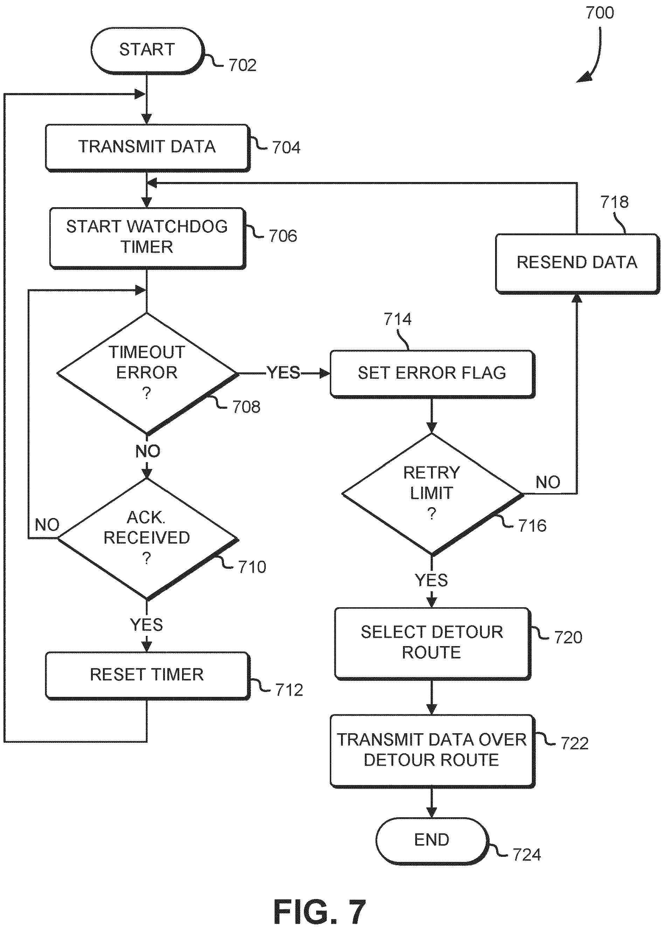

FIG. 7 illustrates a flow chart of a method 700, in accordance with at least one embodiment. The method 700 may be used by at least one of the network devices 101 (see FIG. 1) to determine when to reroute or detour network traffic. In at least one embodiment, the latency functionality 140 performs the method 700. In at least one embodiment, the latency functionality 140 performs the method 700 when the latency functionality 140 is performed by the processor(s) 414 of the source device 402. In at least one embodiment, at least a portion of the network devices 101 (see FIG. 1) may use the method 700 to route network traffic. In at least one embodiment, error detection based on channel latency and detour rerouting of data packets to bypass a failed connection is performed using the method 700 illustrated in FIG. 7. At a start 702, the system 100 is established and the channel latency is known for each port (e.g., the output port 426). For example, the method 600 (see FIG. 6) may be performed by the processor 414 of the source device 402 with respect to each output port of the source device 402 to obtain the channel latency of each output port.

At block 704, a source network device (e.g., the source device 402) transmits data to a destination network device (e.g., the destination device 404). For example, the processor(s) (e.g., the processor(s) 414 in the source device 402) may cause an output port of the source network device to transmit the data to the destination network device. In block 706, the source network device starts a watchdog timer 502 associated with the output port and a corresponding channel. For example, the processor(s) (e.g., the processor(s) 414 in the source device 402) may start the watchdog timer 502 associated with the output port. In at least one embodiment, when the watchdog timer 502 is first started, its error flag is set to FALSE.

In decision block 708, the source network device (e.g., the source device 402) checks for a timeout error generated by the watchdog timer 502. For example, the processor(s) (e.g., the processor(s) 414 in the source device 402) may checks for the timeout error. The processor(s) (e.g., the processor(s) 414 in the source device 402) may read the error flag to determine whether the watchdog timer 502 has timed out. In at least one embodiment, the processor(s) 414 may detect that a timeout error has occurred when the error flag is set to TRUE. If the watchdog timer 502 has not generated a timeout error (e.g., because the watchdog timer 502 has not yet timed out), the result of decision block 708 is NO, and in decision block 710, the source network device (e.g., the source device 402) checks whether a credit acknowledgement signal has been received from the destination network device (e.g., the destination device 404), indicating successful receipt of the transmitted data. For example, the processor(s) (e.g., the processor(s) 414 in the source device 402) may check whether the credit acknowledgement signal has been received.

If a credit acknowledgement signal has not been received from the destination network device (e.g., the destination device 404), the result of decision block 710 is NO and the processor(s) (e.g., the processor(s) 414 in the source device 402) returns to decision block 708 to continue checking for a timeout error generated by the watchdog timer 502. If a credit acknowledgement signal has been received from the destination network device (e.g., the destination device 404), the result of decision block 710 is YES, indicating successful receipt of the data by the destination network device (e.g., the destination device 404), and the processor(s) (e.g., the processor(s) 414 in the source device 402) advances to block 712 to reset the watchdog timer 502. The processor(s) (e.g., the processor(s) 414 in the source device 402) then returns to block 704 to transmit additional data.

Returning to decision block 708, if the watchdog timer 502 has timed out, indicating a transmission error, the result of decision block 708 is YES and in block 714, the watchdog timer 502 sets the error flag (e.g., to TRUE). Then, the processor(s) (e.g., the processor(s) 414 in the source device 402) advances to decision block 716 to determine whether a retry limit has been reached. As previously noted, the retry limit *N* can be set to any value greater than or equal to zero. If the retry limit has not been reached, the result of decision block 716 is NO and the processor(s) (e.g., the processor(s) 414 in the source device 402) advances to block 718 to resend the data. After resending the data, the processor(s) (e.g., the processor(s) 414 in the source device 402) returns to block 706 and starts the watchdog timer 502 again (which may reset the error flag to FALSE). Blocks 708-710 are repeated for the resent data. If the transmission error was due to a transient condition, the transmission retry may be successful and the data transmission continues using blocks 704-712.

If the transmission retry is unsuccessful, the error flag will be set again in block 714 (e.g., to TRUE). If the retry limit has ben reached, the result of decision block 716 is YES. In that event, the processor(s) (e.g., the processor(s) 414 in the source device 402) advances to block 720 to select a detour route. In at least one embodiment, the processor(s) of the source network device (e.g., the source device 402) may select the designated alternate output port and in block 722, the processor(s) of the source network device cause the source network device to transmit data over the detour route. The method 700 may end at 724. Data transmission over the detour route may involve a repeat of the process of blocks 704-712 to transmit the data to its designated destination over the detour pathway. If the detour pathway experiences a failure, the processor(s) of the source network device may repeat blocks 714-722 to retry transmission and/or select another detour route.

In at least one embodiment, the determination of an accurate channel latency for each channel throughout the system 100 permits efficient use of data buffering, early detection of errors, and/or the ability for fast error recovery or selection of a detour route. The resulting network may improve fault tolerance in interconnection networks and/or improve overall reliability of the network.

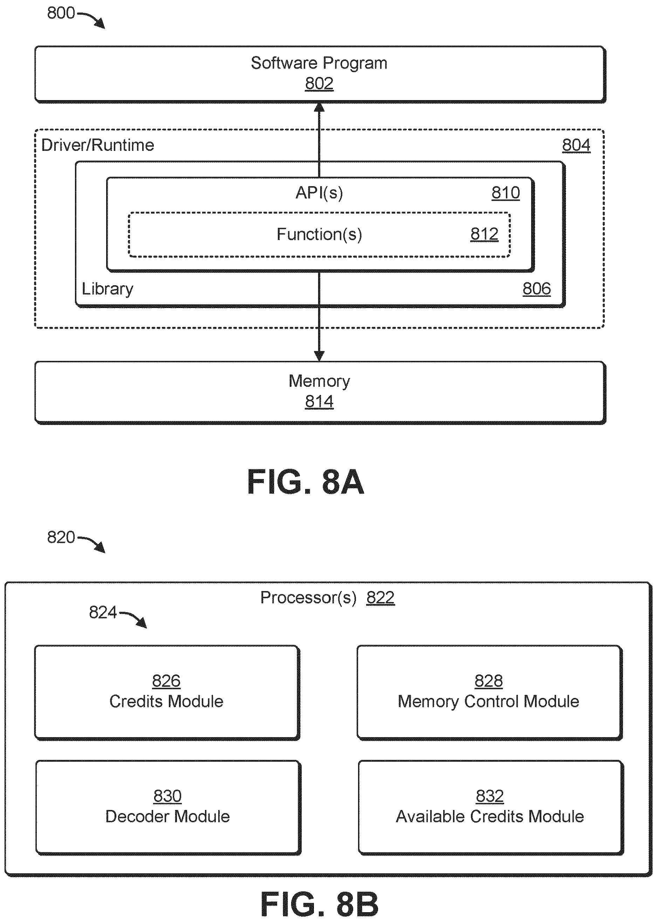

FIG. 8A illustrates an example of a system 800 that includes one or more drivers and/or one or more runtimes (illustrated as reference numeral 804) including one or more libraries 806 to provide one or more application programming interfaces ("API(s)") 810, in accordance with at least one embodiment. In at least one embodiment, the system 800 includes the driver(s) 804 and/or the runtime(s) 804 including the library(ies) 806 to provide to the API(s) 810. In at least one embodiment, the API(s) 810 is/are sets of software instructions that, if executed, cause one or more processors (e.g., processor(s) 822 illustrated in FIG. 8B) to perform one or more computational operations. In at least one embodiment, one or more of the API(s) 810 is/are distributed or otherwise provided as a part of one or more of the library(ies) 806, one or more of the runtime(s) 804, one or more of the driver(s) 804, and/or one or more component of any other grouping of software and/or executable code further described herein. In at least one embodiment, one or more of the API(s) 810 perform one or more computational operations in response to invocation by one or more software programs 802.

In at least one embodiment, one or more of the software program(s) 802 is/are a software module and/or include(s) one or more software modules. In at least one embodiment, a software module is as further illustrated non-exclusively in FIG. 8B as one or more modules 824 and described with respect thereto. In at least one embodiment, one or more of the software program(s) 802 is/are a collection of software code, commands, instructions, and/or other sequences of text to instruct a computing device (e.g., the processor 414) to perform one or more computational operations and/or invoke one or more other sets of instructions, such as the API(s) 810 or API function(s) 812, to be executed by the computing device. In at least one embodiment, functionality provided by one or more of the API(s) 810 includes the API function(s) 812, such as those usable to accelerate one or more portions of the software program(s) 802 using one or more parallel processing units (PPUs), such as graphics processing units (GPUs).

In at least one embodiment, one or more of the API(s) 810 is/are one or more hardware interfaces to one or more circuits to perform one or more computational operations. In at least one embodiment, one or more of the API(s) 810 described herein are implemented as one or more circuits to perform one or more techniques described in connection with FIGS. 1-7. In at least one embodiment, one or more of the software program(s) 802 include instructions that, if executed, cause one or more hardware devices and/or circuits to perform one or more techniques further described in connection with FIGS. 1-7. In at least one embodiment, the system 800 includes one or more or all components of the system 100 described in relation to FIGS. 1-5, and the system 800 may perform one or more or all of the processes and/or operations that the systems and components of the system 100 perform.

In at least one embodiment, the software program(s) 802, such as user-implemented software programs, utilize one or more of the API(s) 810 to perform various computing operations, such as memory reservation, matrix multiplication, arithmetic operations, and/or any computing operation performed by PPUs, such as GPUs, as further described herein. In at least one embodiment, the function(s) 812 include a set of callable functions provided by one or more of the API(s) 810 that are referred to herein as APIs, API functions, software functions, and/or functions, that individually perform one or more computing operations, such as computing operations related to parallel computing. In at least one embodiment, one or more of the API(s) 810 perform management of the buffers 418 and 434, and/or perform other operations described herein (e.g., in connection with FIGS. 1-7).

In at least one embodiment, one or more of the software program(s) 802 interact or otherwise communicate with one or more of the API(s) 810 to perform one or more computing operations using one or more processors (e.g., processor(s) 822 illustrated in FIG. 8B), such as one or more PPUs, such as GPUs. In at least one embodiment, one or more computing operations using one or more PPUs include at least one or more groups of computing operations to be accelerated by execution at least in part by said one or more PPUs. In at least one embodiment, one or more of the software program(s) 802 interact with one or more of the API(s) 810 to implement management of the buffers 418 and 434, and/or perform other operations described herein (e.g., in connection with FIGS. 1-7).

In at least one embodiment, an interface is software instructions that, if executed, provide access to one or more of the function(s) 812 provided by one or more of the API(s) 810. In at least one embodiment, one or more of the software program(s) 802 use(s) a local interface when a software developer compiles one or more of the software program(s) 802 in conjunction with one or more of the library(ies) 806 including or otherwise providing access to one or more of the API(s) 810. In at least one embodiment, one or more of the software program(s) 802 is/are compiled statically in conjunction with one or more pre-compiled ones of the library(ies) 806 and/or uncompiled source code including instructions to perform one or more of the API(s) 810. In at least one embodiment, one or more of the software program(s) 802 are compiled dynamically and the dynamically compiled software program(s) utilize a linker to link to one or more pre-compiled ones of the library(ies) 806, including one or more of the API(s) 810.

In at least one embodiment, one or more of the software program(s) 802 use(s) a remote interface when a software developer executes a software program that utilizes or otherwise communicates with at least one of the library(ies) 806 including one or more of the API(s) 810 over a network or other remote communication medium. In at least one embodiment, one or more of the library(ies) 806 including one or more of the API(s) 810 are to be performed by a remote computing service, such as a computing resource services provider. In at least one embodiment, one or more of the library(ies) 806 including one or more particular APIs (of the API(s) 810) is/are to be performed by any other computing host providing the particular API(s) to one or more of the software program(s) 802.

In at least one embodiment, a processor (e.g., processor(s) 822 illustrated in FIG. 8B) performing or using one or more particular ones of the software program(s) 802 calls, uses, performs, and/or otherwise implements one or more of the API(s) 810 to allocate and otherwise manage memory 814 to be used by the particular software program(s). In at least one embodiment, one or more particular ones of the software program(s) 802 utilize one or more of the API(s) 810 to allocate and otherwise manage the memory 814 to be used by one or more portions of the particular software program(s) to be accelerated using one or more PPUs, such as GPUs, or any other accelerator or processor further described herein. In at least one embodiment, one or more of the software program(s) 802 request one or more neural networks to perform signal processing using one or more of the function(s) 812 provided by one or more of the API(s) 810. In at least one embodiment, memory 416 implements memory 814.

In at least one embodiment, one or more of the API(s) 810 is an API to facilitate parallel computing. In at least one embodiment, one or more of the API(s) 810 is any other API further described herein. In at least one embodiment, one or more of the API(s) 810 is/are provided by one or more of the driver(s) 804 and/or one or more of the runtime(s) 804. In at least one embodiment, one or more of the API(s) 810 is/are provided by a CUDA user-mode driver. In at least one embodiment, one or more of the API(s) 810 is/are provided by a CUDA runtime. In at least one embodiment, one or more of the driver(s) 804 is/are data values and software instructions that, if executed, perform and/or otherwise facilitate operation of one or more of the function(s) 812 of one or more of the API(s) 810 during load and execution of one or more portions of at least one of the software program(s) 802. In at least one embodiment, one or more of the runtime(s) 804 is/are data values and/or software instructions that, if executed, perform or otherwise facilitate operation of one or more of the function(s) 812 of one or more of the API(s) 810 during execution of at least one of the software program(s) 802. In at least one embodiment, one or more particular ones of the software program(s) 802 utilize one or more of the API(s) 810 implemented and/or otherwise provided by one or more of the driver(s) 804 and/or one or more of the runtime(s) 804 to perform combined arithmetic operations by the particular software program(s) during execution by one or more PPUs, such as GPUs.

In at least one embodiment, one or more of the software program(s) 802 utilize one or more of the API(s) 810 provided by one or more of the driver(s) 804 and/or one or more of the runtime(s) 804 to perform combined arithmetic operations of one or more PPUs, such as GPUs. In at least one embodiment, one or more of the API(s) 810 provide combined arithmetic operations through one or more of the driver(s) 804 and/or one or more of the runtime(s) 804, as described above. In at least one embodiment, one or more of the software program(s) 802 utilize one or more of the API(s) 810 provided by one or more of the driver(s) 804 and/or one or more of the runtime(s) 804 to allocate or otherwise reserve one or more blocks of the memory 814 of one or more PPUs, such as GPUs. In at least one embodiment, one or more of the software program(s) 802 utilize one or more of the API(s) 810 provided by one or more of the driver(s) 804 and/or one or more of the runtime(s) 804 to allocate or otherwise reserve blocks of the memory 814.

In at least one embodiment, to improve usability of one or more particular ones of the software program(s) 802 and/or improve performance, one or more portions of the particular software programs are to be accelerated by one or more PPUs (such as GPUs). In at least one embodiment, one or more of the function(s) 812 receive one or more input parameters indicating one or more inputs to one or more neural networks and/or other data to be utilized by the neural network(s), such as one or more hyperparameters of the neural network(s). In at least one embodiment, the input parameter(s) include the one or more inputs and/or the other data. In at least one embodiment, the input parameter(s) include one or more pointers to one or more memory locations where the input(s) and/or the other data is/are stored.

In at least one embodiment, the system 800 includes at least one processor (e.g., processor(s) 822 illustrated in FIG. 8B) including one or more circuits to perform one or more software programs to combine two or more of the API(s) 810 into a single API. In at least one embodiment, the system 800 includes at least one processor (e.g., processor(s) 822 illustrated in FIG. 8B) that uses one or more of the API(s) 810 to implement management of the buffers 418 and 434, and/or otherwise perform operations described herein. In at least one embodiment, the system 800 includes at least one processor (e.g., processor(s) 822 illustrated in FIG. 8B) that uses one or more of the API(s) 810 to perform one or more operations illustrated in and/or described with respect to one or more of FIGS. 1-7, such as one or more processes illustrated in FIGS. 1-7 describing routing functionality or portion(s) thereof. In at least one embodiment, the system 800 includes at least one processor (e.g., processor(s) 822 illustrated in FIG. 8B) to perform one or more of the function(s) 812, such as those described in connection with FIGS. 1-7. In at least one embodiment, one or more of the API(s) 810 is to be performed by hardware described in connection with FIGS. 9A-B.

FIG. 8B is block diagram 820 illustrating example processor(s) 822 and the module(s) 824, according to at least one embodiment. Referring to FIG. 8B, in at least one embodiment, the processor(s) 822 may be implemented by at least one of the processors 132, 414, or 438. In at least one embodiment, the processor(s) 822 may perform one or more processes such as those described herein with respect to operational control of the date transmission from the source device 402 to reception and decoding of data by the destination device 404, and/or may otherwise perform operations described herein. In at least one embodiment, the processor(s) 822 perform(s) one or more processes such as those described in connection with FIGS. 1-7.

In at least one embodiment, the processor(s) 822 include one or more processors such as those described in connection with FIGS. 9A-9B. In at least one embodiment, processor(s) 822 may be any suitable processing unit and/or combination of processing units, such as one or more CPUs, GPUs, DPUs, GPGPUs, PPUs, and/or variations thereof. The processor(s) 822 includes the module(s) 824, which may include a credits module 826, a memory control module 828, a decode module 830, and an available credits module 832, which perform functions described above with respect to FIGS. 1-7. For example, at least one of the credits module 826, the memory control module 828, the decode module 830, or the available credits module 832 may implement the latency functionality 140. The module(s) 824 may be distributed among multiple processors that communicate over a bus, network, by writing to shared memory, and/or any suitable communication process such as those described herein. In at least one embodiment, the module(s) 824 may include processor executable instructions that implement operation of the core timer to measure channel latency, and operation of the watchdog timer 502 to detect transmission errors.

As used in any implementation described herein, unless otherwise clear from context or stated explicitly to contrary, a module refers to any combination of software logic, firmware logic, hardware logic, and/or circuitry configured to provide functionality described herein. Software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. Modules may, collectively or individually, be embodied as circuitry that forms part of a larger system, for example, an integrated circuit (IC), system on-chip (SoC), and so forth. a module performs one or more processes in connection with any suitable processing unit and/or combination of processing units, such as one or more CPUs, GPUs, GPGPUs, DPUs, PPUs, and/or variations thereof.

In at least one embodiment, as used in any implementation described herein, unless otherwise clear from context or stated explicitly to contrary, terms such as "module" and nominalized verbs (e.g., image manager, image analyzer, analytics engine, controller, and/or other terms) each refers to any combination of software logic, firmware logic, hardware logic, and/or circuitry configured to provide functionality described herein. In at least one embodiment, software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth.

### LOGIC

FIG. 9A illustrates logic 915 which, as described elsewhere herein, can be used in one or more devices to perform operations such as those discussed herein in accordance with at least one embodiment. In at least one embodiment, logic 915 is used to perform inferencing and/or training operations associated with one or more embodiments. In at least one embodiment, logic 915 is inference and/or training logic. Details regarding logic 915 are provided below in conjunction with FIGS. 9A and/or 9B. In at least one embodiment, logic refers to any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

In at least one embodiment, logic 915 may include, without limitation, code and/or data storage 901 to store forward and/or output weight and/or input/output data, and/or other parameters to configure neurons or layers of a neural network trained and/or used for inferencing in aspects of one or more embodiments. In at least one embodiment, logic 915 may include, or be coupled to code and/or data storage 901 to store graph code or other software to control timing and/or order, in which weight and/or other parameter information is to be loaded to configure, logic, including integer and/or floating point units (collectively, arithmetic logic units (ALUs)). In at least one embodiment, code, such as graph code, loads weight or other parameter information into processor ALUs based on an architecture of a neural network to which such code corresponds. In at least one embodiment, code and/or data storage 901 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 901 may be included with other on-chip or off-chip data storage, including a processor's L1, L2, or L3 cache or system memory.

In at least one embodiment, any portion of code and/or data storage 901 may be internal or external to one or more processors or other hardware logic devices or circuits. In at least one embodiment, code and/or code and/or data storage 901 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 901 is internal or external to a processor, for example, or including DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, logic 915 may include, without limitation, a code and/or data storage 905 to store backward and/or output weight and/or input/output data corresponding to neurons or layers of a neural network trained and/or used for inferencing in aspects of one or more embodiments. In at least one embodiment, code and/or data storage 905 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, logic 915 may include, or be coupled to code and/or data storage 905 to store graph code or other software to control timing and/or order, in which weight and/or other parameter information is to be loaded to configure, logic, including integer and/or floating point units (collectively, arithmetic logic units (ALUs)).

In at least one embodiment, code, such as graph code, causes the loading of weight or other parameter information into processor ALUs based on an architecture of a neural network to which such code corresponds. In at least one embodiment, any portion of code and/or data storage 905 may be included with other on-chip or off-chip data storage, including a processor's L1, L2, or L3 cache or system memory. In at least one embodiment, any portion of code and/or data storage 905 may be internal or external to one or more processors or other hardware logic devices or circuits. In at least one embodiment, code and/or data storage 905 may be cache memory, DRAM, SRAM, non-volatile memory (e.g., flash memory), or other storage. In at least one embodiment, a choice of whether code and/or data storage 905 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 901 and code and/or data storage 905 may be separate storage structures. In at least one embodiment, code and/or data storage 901 and code and/or data storage 905 may be a combined storage structure. In at least one embodiment, code and/or data storage 901 and code and/or data storage 905 may be partially combined and partially separate. In at least one embodiment, any portion of code and/or data storage 901 and code and/or data storage 905 may be included with other on-chip or off-chip data storage, including a processor's L1, L2, or L3 cache or system memory.

In at least one embodiment, logic 915 may include, without limitation, one or more arithmetic logic unit(s) ("ALU(s)") 910, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 920 that are functions of input/output and/or weight parameter data stored in code and/or data storage 901 and/or code and/or data storage 905. In at least one embodiment, activations stored in activation storage 920 are generated according to linear algebraic and or matrix-based mathematics performed by ALU(s) 910 in response to performing instructions or other code, wherein weight values stored in code and/or data storage 905 and/or data storage 901 are used as operands along with other values, such as bias values, gradient information, momentum values, or other parameters or hyperparameters, any or all of which may be stored in code and/or data storage 905 or code and/or data storage 901 or another storage on or off-chip.

In at least one embodiment, ALU(s) 910 are included within one or more processors or other hardware logic devices or circuits, whereas in another embodiment, ALU(s) 910 may be external to a processor or other hardware logic device or circuit that uses them (e.g., a co-processor). In at least one embodiment, ALUs 910 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 901, code and/or data storage 905, and activation storage 920 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 920 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 920 may be cache memory, DRAM, SRAM, non-volatile memory (e.g., flash memory), or other storage. In at least one embodiment, activation storage 920 may be completely or partially within or external to one or more processors or other logical circuits. In at least one embodiment, a choice of whether activation storage 920 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, logic 915 illustrated in FIG. 9A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, logic 915 illustrated in FIG. 9A may be used in conjunction with central processing unit ("CPU") hardware, graphics processing unit ("GPU") hardware or other hardware, such as field programmable gate arrays ("FPGAs").

FIG. 9B illustrates logic 915, according to at least one embodiment. In at least one embodiment, logic 915 is inference and/or training logic. In at least one embodiment, logic 915 may include, without limitation, hardware logic in which computational resources are dedicated or otherwise exclusively used in conjunction with weight values or other information corresponding to one or more layers of neurons within a neural network. In at least one embodiment, logic 915 illustrated in FIG. 9B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, logic 915 illustrated in FIG. 9B may be used in conjunction with central processing unit (CPU) hardware, graphics processing unit (GPU) hardware or other hardware, such as field programmable gate arrays (FPGAs). In at least one embodiment, logic 915 includes, without limitation, code and/or data storage 901 and code and/or data storage 905, which may be used to store code (e.g., graph code), weight values and/or other information, including bias values, gradient information, momentum values, and/or other parameter or hyperparameter information. In at least one embodiment illustrated in FIG. 9B, each of code and/or data storage 901 and code and/or data storage 905 is associated with a dedicated computational resource, such as computational hardware 902 and computational hardware 906, respectively. In at least one embodiment, each of computational hardware 902 and computational hardware 906 includes one or more ALUs that perform mathematical functions, such as linear algebraic functions, only on information stored in code and/or data storage 901 and code and/or data storage 905, respectively, result of which is stored in activation storage 920.

In at least one embodiment, each of code and/or data storage 901 and 905 and corresponding computational hardware 902 and 906, respectively, correspond to different layers of a neural network, such that resulting activation from one storage/computational pair 901/902 of code and/or data storage 901 and computational hardware 902 is provided as an input to a next storage/computational pair 905/906 of code and/or data storage 905 and computational hardware 906, in order to mirror a conceptual organization of a neural network. In at least one embodiment, each of storage/computational pairs 901/902 and 905/906 may correspond to more than one neural network layer. In at least one embodiment, additional storage/computation pairs (not shown) subsequent to or in parallel with storage/computation pairs 901/902 and 905/906 may be included in logic 915.

Each edge element (e.g., the edge element 102A), switch (e.g., the switch 110B), and endpoint (e.g., the endpoint 120) may include elements such as the core logic 412, processor 414 and memory 416. Those elements can implement the hardware structures 315 shown in FIGS. 9A-9B. For example, the data storage 901 and code and data storage 905 can implement the memory 416 while computational hardware 902 and 906 can be implemented by the processor 414 in FIG. 4. The components illustrated in FIGS. 9A-9B can be implemented in each of the routing elements illustrated in FIGS. 1-5.

### DATA CENTER

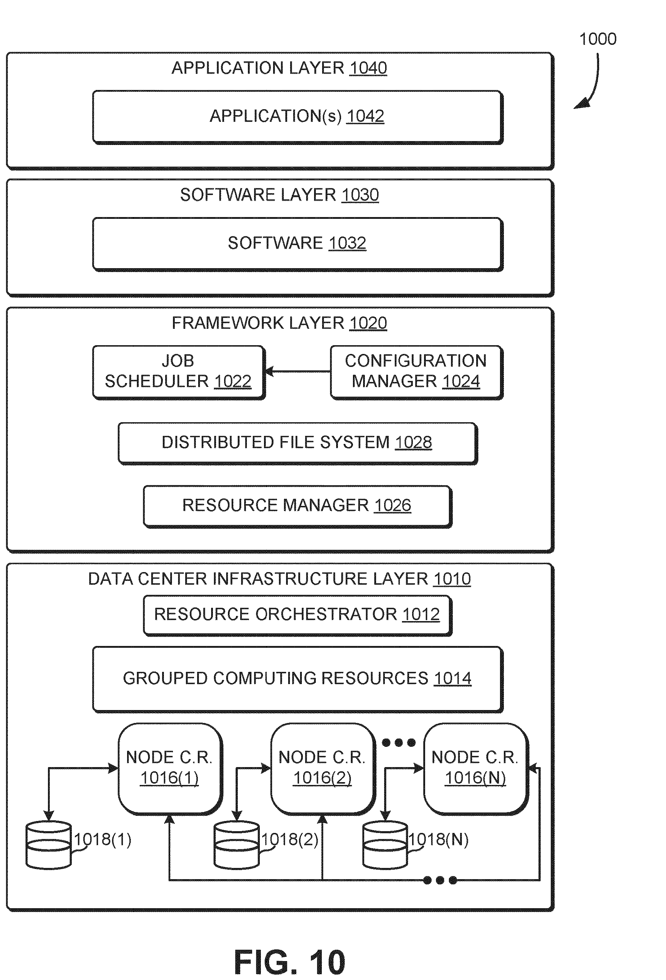

FIG. 10 illustrates an example data center 1000, in which at least one embodiment may be used. In at least one embodiment, data center 1000 includes a data center infrastructure layer 1010, a framework layer 1020, a software layer 1030 and an application layer 1040.

In at least one embodiment, as shown in FIG. 10, data center infrastructure layer 1010 may include a resource orchestrator 1012, grouped computing resources 1014, and node computing resources ("node C.R.s") 1016(1)-1016(N), where "N" represents a positive integer (which may be a different integer "N" than used in other figures). In at least one embodiment, node C.R.s 1016(1)-1016(N) may include, but are not limited to, any number of central processing units ("CPUs") or other processors (including accelerators, field programmable gate arrays (FPGAs), graphics processors, etc.), memory storage devices 1018(1)-1018(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 1016(1)-1016(N) may be a server having one or more of above-mentioned computing resources.

In at least one embodiment, grouped computing resources 1014 may include separate groupings of node C.R.s housed within one or more racks (not shown), or many racks housed in data centers at various geographical locations (also not shown). In at least one embodiment, separate groupings of node C.R.s within grouped computing resources 1014 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 1012 may configure or otherwise control one or more node C.R.s 1016(1)-1016(N) and/or grouped computing resources 1014. In at least one embodiment, resource orchestrator 1012 may include a software design infrastructure ("SDI") management entity for data center 1000. In at least one embodiment, resource orchestrator 1012 may include hardware, software or some combination thereof.

In at least one embodiment, as shown in FIG. 10, framework layer 1020 includes a job scheduler 1022, a configuration manager 1024, a resource manager 1026 and a distributed file system 1028. In at least one embodiment, framework layer 1020 may include a framework to support software 1032 of software layer 1030 and/or one or more application(s) 1042 of application layer 1040. In at least one embodiment, software 1032 or application(s) 1042 may respectively include web-based service software or applications, such as those provided by Amazon Web Services, Google Cloud, and Microsoft Azure. In at least one embodiment, framework layer 1020 may be, but is not limited to, a type of free and open-source software web application framework such as Apache Spark^{™} (hereinafter "Spark") that may utilize distributed file system 1028 for large-scale data processing (e.g., "big data"). In at least one embodiment, job scheduler 1022 may include a Spark driver to facilitate scheduling of workloads supported by various layers of data center 1000. In at least one embodiment, configuration manager 1024 may be capable of configuring different layers such as software layer 1030 and framework layer 1020 including Spark and distributed file system 1028 for supporting large-scale data processing. In at least one embodiment, resource manager 1026 may be capable of managing clustered or grouped computing resources mapped to or allocated for support of distributed file system 1028 and job scheduler 1022. In at least one embodiment, clustered or grouped computing resources may include grouped computing resources 1014 at data center infrastructure layer 1010. In at least one embodiment, resource manager 1026 may coordinate with resource orchestrator 1012 to manage these mapped or allocated computing resources.

In at least one embodiment, software 1032 included in software layer 1030 may include software used by at least portions of node C.R.s 1016(1)-1016(N), grouped computing resources 1014, and/or distributed file system 1028 of framework layer 1020. In at least one embodiment, one or more types of software may include, but are not limited to, Internet web page search software, e-mail virus scan software, database software, and streaming video content software.

In at least one embodiment, application(s) 1042 included in application layer 1040 may include one or more types of applications used by at least portions of node C.R.s 1016(1)-1016(N), grouped computing resources 1014, and/or distributed file system 1028 of framework layer 1020. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 1024, resource manager 1026, and resource orchestrator 1012 may implement any number and type of self-modifying actions based on any amount and type of data acquired in any technically feasible fashion. In at least one embodiment, self-modifying actions may relieve a data center operator of data center 1000 from making possibly bad configuration decisions and possibly avoiding underutilized and/or poor performing portions of a data center.

In at least one embodiment, data center 1000 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 1000. In at least one embodiment, trained machine learning models corresponding to one or more neural networks may be used to infer or predict information using resources described above with respect to data center 1000 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Logic 915 are used to perform inferencing and/or training operations associated with one or more embodiments. Details regarding logic 915 are provided herein in conjunction with FIGS. 9A and/or 9B. In at least one embodiment, logic 915 may be used in data center 1000 for inferencing or predicting operations based, at least in part, on weight parameters calculated using neural network training operations, neural network functions and/or architectures, or neural network use cases described herein.

The data center 1000 may include a large number of processors coupled together in a network, such as illustrated by the system 100 of FIG. 1. The distributed file system 1028 in the data center 1000 may include an extensive interconnection system, a portion of which may be implemented using the network devices 101 illustrated in FIG. 1. The data center infrastructure layer 1010 may include a number of endpoints (e.g., the endpoints 116 and 120), edges (e.g., the edge elements 102A-102C), and/or an array of interconnections provided, for example, by switches (e.g., the switches 106, 110, and 114). The switches may be interconnected by physical data cables of varying lengths and customized channel latency measurements may be used by the various network interconnections to improve buffer utilization, error recovery, and/or data path rerouting to bypass disrupted portions of the network.

### COMPUTER SYSTEMS

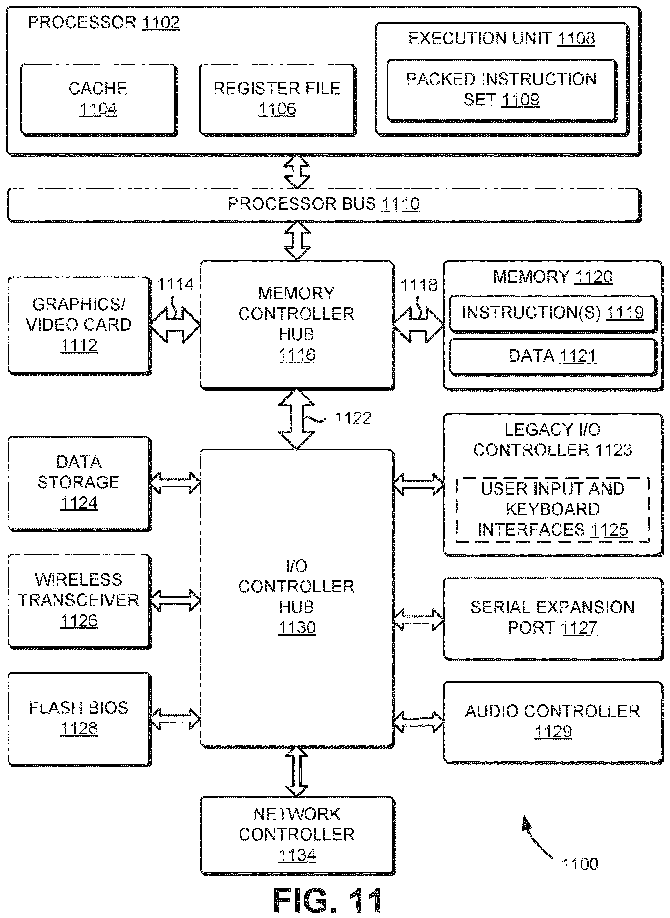

FIG. 11 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 1100 may include, without limitation, a component, such as a processor 1102 to employ execution units including logic to perform algorithms for process data, in accordance with present disclosure, such as in embodiment described herein. In at least one embodiment, computer system 1100 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes, and like) may also be used. In at least one embodiment, computer system 1100 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 1100 may include, without limitation, processor 1102 that may include, without limitation, one or more execution units 1108 to perform machine learning model training and/or inferencing according to techniques described herein. In at least one embodiment, computer system 1100 is a single processor desktop or server system, but in another embodiment, computer system 1100 may be a multiprocessor system. In at least one embodiment, processor 1102 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 1102 may be coupled to a processor bus 1110 that may transmit data signals between processor 1102 and other components in computer system 1100.

In at least one embodiment, processor 1102 may include, without limitation, a Level 1 ("L1") internal cache memory ("cache") 1104. In at least one embodiment, processor 1102 may have a single internal cache or multiple levels of internal cache. In at least one embodiment, cache memory may reside external to processor 1102. Other embodiments may also include a combination of both internal and external caches depending on particular implementation and needs. In at least one embodiment, a register file 1106 may store different types of data in various registers including, without limitation, integer registers, floating point registers, status registers, and an instruction pointer register.

In at least one embodiment, execution unit 1108, including, without limitation, logic to perform integer and floating point operations, also resides in processor 1102. In at least one embodiment, processor 1102 may also include a microcode ("ucode") read only memory ("ROM") that stores microcode for certain macro instructions. In at least one embodiment, execution unit 1108 may include logic to handle a packed instruction set 1109. In at least one embodiment, by including packed instruction set 1109 in an instruction set of a general-purpose processor, along with associated circuitry to execute instructions, operations used by many multimedia applications may be performed using packed data in processor 1102. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 1108 may also be used in microcontrollers, embedded processors, graphics devices, DSPs, and other types of logic circuits. In at least one embodiment, computer system 1100 may include, without limitation, a memory 1120. In at least one embodiment, memory 1120 may be a Dynamic Random Access Memory ("DRAM") device, a Static Random Access Memory ("SRAM") device, a flash memory device, or another memory device. In at least one embodiment, memory 1120 may store instruction(s) 1119 and/or data 1121 represented by data signals that may be executed by processor 1102.

In at least one embodiment, a system logic chip may be coupled to processor bus 1110 and memory 1120. In at least one embodiment, a system logic chip may include, without limitation, a memory controller hub ("MCH") 1116, and processor 1102 may communicate with MCH 1116 via processor bus 1110. In at least one embodiment, MCH 1116 may provide a high bandwidth memory path 1118 to memory 1120 for instruction and data storage and for storage of graphics commands, data and textures. In at least one embodiment, MCH 1116 may direct data signals between processor 1102, memory 1120, and other components in computer system 1100 and to bridge data signals between processor bus 1110, memory 1120, and a system I/O interface 1122. In at least one embodiment, a system logic chip may provide a graphics port for coupling to a graphics controller. In at least one embodiment, MCH 1116 may be coupled to memory 1120 through high bandwidth memory path 1118 and a graphics/video card 1112 may be coupled to MCH 1116 through an Accelerated Graphics Port ("AGP") interconnect 1114.

In at least one embodiment, computer system 1100 may use system I/O interface 1122 as a proprietary hub interface bus to couple MCH 1116 to an I/O controller hub ("ICH") 1130. In at least one embodiment, ICH 1130 may provide direct connections to some I/O devices via a local I/O bus. In at least one embodiment, a local I/O bus may include, without limitation, a high-speed I/O bus for connecting peripherals to memory 1120, a chipset, and processor 1102. Examples may include, without limitation, an audio controller 1129, a firmware hub ("flash BIOS") 1128, a wireless transceiver 1126, a data storage 1124, a legacy I/O controller 1123 containing user input and keyboard interfaces 1125, a serial expansion port 1127, such as a Universal Serial Bus ("USB") port, and a network controller 1134. In at least one embodiment, data storage 1124 may include a hard disk drive, a floppy disk drive, a CD-ROM device, a flash memory device, or other mass storage device.

In at least one embodiment, FIG. 11 illustrates a system, which includes interconnected hardware devices or "chips," whereas in other embodiments, FIG. 11 may illustrate an exemplary SoC. In at least one embodiment, devices illustrated in FIG. 11 may be interconnected with proprietary interconnects, standardized interconnects (e.g., PCIe) or some combination thereof. In at least one embodiment, one or more components of computer system 1100 are interconnected using compute express link (CXL) interconnects.

Logic 915 are used to perform inferencing and/or training operations associated with one or more embodiments. Details regarding logic 915 are provided herein in conjunction with FIGS. 9A and/or 9B. In at least one embodiment, logic 915 may be used in computer system 1100 for inferencing or predicting operations based, at least in part, on weight parameters calculated using neural network training operations, neural network functions and/or architectures, or neural network use cases described herein.

The system 100 of FIG. 1 illustrates a number of interconnection components, such as the network devices 101, which may include one or more switches, one or more edge elements, and/or one or more endpoints, coupled together in a network. The system 100 of FIG. 1 may include a number of endpoints (e.g., the endpoints 116 and 120), edges (e.g., the edge elements 102A-102C), and/or an array of interconnections, for example, provided by switches (e.g., the switches 106, 110, and 114). The switches may be interconnected by physical data cables of varying lengths and customized channel latency measurements may be obtained for the various network interconnections and used to improve buffer utilization, error recovery, and/or data path rerouting to bypass failed portions of the network.

Each of these interconnection components (e.g., edge elements, switches, and/or endpoints) include hardware elements, such as the processor 1102 and the memory 1120. In at least one embodiment, the interconnection components may include the network controller 1134 for edge elements (e.g., the edge elements 102A-102C). The instructions 1109 and 1119may include the instructions 136 (e.g., implementing the latency functionality 140), which may be performed by the processor 1102.

At least one embodiment of the disclosure can be described in view of the following clauses:
1. A system comprising one or more circuits to: transmit a data packet over a network channel to a destination; determine a channel latency between transmission of the data packet and receipt of an acknowledgement signal transmitted from the destination; and determine a size of a channel buffer based at least in part on the channel latency.
2. The system of clause 1, wherein the one or more circuits are to send another transmission to the destination; and detect an error has occurred if more than a predetermined amount of time has elapsed and another acknowledgement signal has not been received in response to the other transmission, the predetermined amount of time to be based at least in part on the channel latency.
3. The system of any of clauses 1 and 2, wherein the one or more circuits are to resend at least one data packet of the other transmission to the destination if the one or more circuits detect the error has occurred.
4. The system of clause 2, further comprising first and second output ports, wherein the one or more circuits are to send the other transmission to the destination via the first output port, and resend at least one data packet of the other transmission to the destination using the second output port if the one or more circuits detect the error has occurred.
5. The system of clause 4, wherein the one or more circuits are to resend the at least one data packet of the other transmission to the destination using the second output port if the one or more circuits detect the error has occurred and after attempting to resend the least one data packet of the other transmission to the destination a predetermined number of times using the first output port.
6. The system of any of clauses 1 to 5, wherein the one or more circuits are to determine a time-out period for at least one timer based at least in part on the channel latency; start the at least one timer if the one or more circuits transmit a message to the destination; and detect an error has occurred if the at least one timer indicates the time-out period has elapsed and another acknowledgement signal has not been received in response to the message.
7. The system of any of clauses 1 to 5, wherein the one or more circuits are to determine a plurality of channel latencies corresponding to a plurality of network channels by transmitting another data packet over each of the plurality of network channels to the plurality of destinations and receiving a plurality of acknowledgement signals from the plurality of destinations; determine sizes of channel buffers corresponding to the plurality of network channels based at least in part on the plurality of channel latencies; send another transmission to a particular one of the plurality of destinations over a particular one of the plurality of network channels; and configure a different timer to detect an error has occurred if another acknowledgement signal is not received over the particular network channel in response to the other transmission within a time period based on one of the plurality of channel latencies corresponding to the particular network channel.
8. A method comprising transmitting, from a source network device, a data packet over a network channel to a destination network device; determining, by the source network device, a channel latency between transmission of the data packet and receipt of an acknowledgement signal transmitted from the destination network device; and implementing, by the source network device, a channel buffer based at least in part on the channel latency.
9. The method of clause 8, further comprising sending, by the source network device, another transmission to the destination network device; and implementing, by the source network device, a timer to detect an error if another acknowledgement signal is not received in response to the other transmission within a time period based at least in part on the channel latency.
10. The method of clause 9, further comprising resending, by the source network device, at least one data packet of the other transmission to the destination network device if the error is detected.
11. The method of any of clauses 9 to 10, wherein sending the other transmission to the destination network device comprises sending the other transmission to the destination network device via an output port, and the method further comprises resending, by the source network device, at least one data packet of the other transmission to the destination network device using an alternate output port if the error is detected.
12. The method of any of clauses 9 to 11, further comprising attempting, by the source network device, to resend the least one data packet of the other transmission to the destination network device a predetermined number of times using an output port if the error is detected; and resending, by the source network device, the at least one data packet of the other transmission to the destination network device using an alternate output port if the error is detected the predetermined number of times.
13. The method of any of clauses 8 to 12, further comprising determining a buffer size for the channel buffer based at least in part on the channel latency.
14. The method of any of clauses 8 to 13 further comprising determining a respective channel latency corresponding to each of a plurality of network channels by transmitting a data packet over each of the plurality of network channels to a plurality of destinations and receiving a plurality of acknowledgement signals from the plurality of destinations; implementing a respective channel buffer for each of the plurality of network channels based at least in part on the respective one of the plurality of channel latencies; sending another transmission to a particular one of the plurality of destinations over a particular one of the plurality of network channels; and implementing a timer to detect an error if another acknowledgement signal is not received over the particular network channel in response to the other transmission within a time period based on one of the plurality of channel latencies corresponding to the particular network channel.
15. A data center comprising a plurality of computing devices comprising a source computing device and a destination computing device, the source computing device to be associated with a network controller; and a network connecting the source computing device to the destination computing device, the network comprising: a first network interconnection device intermediate the source computing device and a destination computing device; and a network channel connecting the source computing device to the first network interconnection device, the network controller to send a data packet over the network channel, the network controller to be associated with a latency timer to determine a channel latency between transmission of the data packet and receipt of an acknowledgement signal transmitted by the source computing device from the first network interconnection device, and the network controller to be associated with a channel buffer having a size based at least in part on the channel latency.
16. The data center of clause 15, wherein the source computing device is to send another transmission to the first network interconnection device, and source computing device further comprises a watchdog timer to detect an error if another acknowledgement signal is not received in response to the other transmission by the source computing device within a time period based at least in part on the channel latency.
17. The data center of clause 16, wherein the source computing device is to use a different port to resend at least one data packet of the other transmission to the first network interconnection device when the error is detected.
18. The data center of any of clauses 15 to 17 for use with a plurality of network interconnection devices wherein the first network interconnection device is coupled to a subsequent network interconnection device, and the first network interconnection device further comprises an output port to transmit another data packet over another network channel from the first network interconnection device to the subsequent network interconnection device; another timer associated with the output port to determine another channel latency between transmission of the other data packet from the first network interconnection device and receipt of another acknowledgement signal transmitted from the subsequent interconnection device; and another channel buffer based at least in part on the other channel latency.
19. The data center of clause 18, wherein the first network interconnection device is to send another transmission to the subsequent network interconnection device, and the first network interconnection device further comprises a watchdog timer to detect an error if another acknowledgement signal is not received in response to the other transmission by the first network interconnection device within a time period based at least in part on the other channel latency.
20. The data center of clause 19, wherein the first network interconnection device is to resend at least one data packet of the other transmission from the output port to the subsequent network interconnection device when the error is detected.
21. The data center of clause 19, wherein the first network interconnection device is to resend at least one data packet of the other transmission using an alternate output port when the error is detected.
22. The data center of clause 21, wherein the first network interconnection device is to resend at least one data packet of the other transmission using the alternate output port when the error is detected after attempting to resend the least one data packet of the other transmission to the subsequent network interconnection device a predetermined number of times using the output port.
23. The data center of clause 22, wherein the first network interconnection device is to resend at least one data packet of the other transmission to a different subsequent network interconnection device using an alternate output port when the error is detected.
24. The data center of any of clauses 15 to 23 for use with a plurality of network channels to connect the first network interconnection device to a plurality of subsequent network interconnection devices, wherein the first network interconnection device comprises the latency timer is to determine a plurality of channel latencies corresponding to the plurality of network channels by transmitting a data packet over each of the plurality of network channels to the plurality of subsequent network interconnection devices and receiving a plurality of acknowledgement signals from the plurality of subsequent network interconnection devices; implement a respective channel buffer for each of the plurality of network channels based at least in part on a respective one of the plurality of channel latencies; implement a respective watchdog timer for each of the plurality of network channels to detect an error if another acknowledgement signal is not received over the particular network channel in response to the other transmission within a time period based on one of the plurality of channel latencies corresponding to the particular network channel; and send another transmission to a particular one of the plurality of subsequent network interconnection devices over a particular one of the plurality of network channels using the respective watchdog timer for the particular one of the plurality of network channels.
25. The data center of clause 24, wherein a buffer size of the different channel buffer for each of the plurality of network channels is determined at least in part on a physical length of the respective network channel.

In at least one embodiment, a single semiconductor platform may refer to a sole unitary semiconductor-based integrated circuit or chip. In at least one embodiment, multi-chip modules may be used with increased connectivity which simulate on-chip operation, and make substantial improvements over utilizing a conventional central processing unit ("CPU") and bus implementation. In at least one embodiment, various modules may also be situated separately or in various combinations of semiconductor platforms per desires of user.

In at least one embodiment, computer programs in form of machine-readable executable code or computer control logic algorithms are stored in main memory and/or secondary storage such as those described herein. Computer programs, if executed by one or more processors, enable at least one system described herein to perform various functions in accordance with at least one embodiment. In at least one embodiment, memory, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of a CPU such as those described herein, a parallel processing system such as those described herein, an integrated circuit capable of at least a portion of capabilities of both the CPU, the parallel processing system, a chipset (e.g., a group of integrated circuits designed to work and sold as a unit for performing related functions, etc.), and/or any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, a computer system described herein may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic. In at least one embodiment, a computer system includes or refers to any devices illustrated in any of the drawings and/or described herein.

In at least one embodiment, a parallel processing system includes, without limitation, a plurality of parallel processing units ("PPUs") and associated memories. In at least one embodiment, PPUs are connected to a host processor or other peripheral devices via an interconnect and a switch or multiplexer. In at least one embodiment, a parallel processing system distributes computational tasks across the PPUs, which can be parallelizable - for example, as part of distribution of computational tasks across multiple graphics processing unit ("GPU") thread blocks. In at least one embodiment, memory is shared and accessible (e.g., for read and/or write access) across some or all of the PPUs, although such shared memory may incur performance penalties relative to use of local memory and registers resident to a PPU. In at least one embodiment, operation of the PPUs is synchronized through use of a command such as __syncthreads(), wherein all threads in a block (e.g., executed across multiple PPUs) to reach a certain point of execution of code before proceeding.

In at least one embodiment, one or more techniques described herein utilize a oneAPI programming model. In at least one embodiment, a oneAPI programming model refers to a programming model for interacting with various compute accelerator architectures. In at least one embodiment, oneAPI refers to an application programming interface (API) designed to interact with various compute accelerator architectures. In at least one embodiment, a oneAPI programming model utilizes a DPC++ programming language. In at least one embodiment, a DPC++ programming language refers to a high-level language for data parallel programming productivity. In at least one embodiment, a DPC++ programming language is based at least in part on C and/or C++ programming languages. In at least one embodiment, a oneAPI programming model is a programming model such as those developed by Intel Corporation of Santa Clara, CA.

In at least one embodiment, oneAPI and/or oneAPI programming model is utilized to interact with various accelerator, GPU, processor, and/or variations thereof, architectures. In at least one embodiment, oneAPI includes a set of libraries that implement various functionalities. In at least one embodiment, oneAPI includes at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

In at least one embodiment, a oneAPI DPC++ library, also referred to as oneDPL, is a library that implements algorithms and functions to accelerate DPC++ kernel programming. In at least one embodiment, oneDPL implements one or more standard template library (STL) functions. In at least one embodiment, oneDPL implements one or more parallel STL functions. In at least one embodiment, oneDPL provides a set of library classes and functions such as parallel algorithms, iterators, function object classes, range-based API, and/or variations thereof. In at least one embodiment, oneDPL implements one or more classes and/or functions of a C++ standard library. In at least one embodiment, oneDPL implements one or more random number generator functions.

In at least one embodiment, a oneAPI math kernel library, also referred to as oneMKL, is a library that implements various optimized and parallelized routines for various mathematical functions and/or operations. In at least one embodiment, oneMKL implements one or more basic linear algebra subprograms (BLAS) and/or linear algebra package (LAPACK) dense linear algebra routines. In at least one embodiment, oneMKL implements one or more sparse BLAS linear algebra routines. In at least one embodiment, oneMKL implements one or more random number generators (RNGs). In at least one embodiment, oneMKL implements one or more vector mathematics (VM) routines for mathematical operations on vectors. In at least one embodiment, oneMKL implements one or more Fast Fourier Transform (FFT) functions.

In at least one embodiment, a oneAPI data analytics library, also referred to as oneDAL, is a library that implements various data analysis applications and distributed computations. In at least one embodiment, oneDAL implements various algorithms for preprocessing, transformation, analysis, modeling, validation, and decision making for data analytics, in batch, online, and distributed processing modes of computation. In at least one embodiment, oneDAL implements various C++ and/or Java APIs and various connectors to one or more data sources. In at least one embodiment, oneDAL implements DPC++ API extensions to a traditional C++ interface and enables GPU usage for various algorithms.

In at least one embodiment, a oneAPI deep neural network library, also referred to as oneDNN, is a library that implements various deep learning functions. In at least one embodiment, oneDNN implements various neural network, machine learning, and deep learning functions, algorithms, and/or variations thereof.

In at least one embodiment, a oneAPI collective communications library, also referred to as oneCCL, is a library that implements various applications for deep learning and machine learning workloads. In at least one embodiment, oneCCL is built upon lower-level communication middleware, such as message passing interface (MPI) and libfabrics. In at least one embodiment, oneCCL enables a set of deep learning specific optimizations, such as prioritization, persistent operations, out of order executions, and/or variations thereof. In at least one embodiment, oneCCL implements various CPU and GPU functions.

In at least one embodiment, a oneAPI threading building blocks library, also referred to as oneTBB, is a library that implements various parallelized processes for various applications. In at least one embodiment, oneTBB is utilized for task-based, shared parallel programming on a host. In at least one embodiment, oneTBB implements generic parallel algorithms. In at least one embodiment, oneTBB implements concurrent containers. In at least one embodiment, oneTBB implements a scalable memory allocator. In at least one embodiment, oneTBB implements a work-stealing task scheduler. In at least one embodiment, oneTBB implements low-level synchronization primitives. In at least one embodiment, oneTBB is compiler-independent and usable on various processors, such as GPUs, PPUs, CPUs, and/or variations thereof.

In at least one embodiment, a oneAPI video processing library, also referred to as oneVPL, is a library that is utilized for accelerating video processing in one or more applications. In at least one embodiment, oneVPL implements various video decoding, encoding, and processing functions. In at least one embodiment, oneVPL implements various functions for media pipelines on CPUs, GPUs, and other accelerators. In at least one embodiment, oneVPL implements device discovery and selection in media centric and video analytics workloads. In at least one embodiment, oneVPL implements API primitives for zero-copy buffer sharing.

In at least one embodiment, a oneAPI programming model utilizes a DPC++ programming language. In at least one embodiment, a DPC++ programming language is a programming language that includes, without limitation, functionally similar versions of CUDA mechanisms to define device code and distinguish between device code and host code. In at least one embodiment, a DPC++ programming language may include a subset of functionality of a CUDA programming language. In at least one embodiment, one or more CUDA programming model operations are performed using a oneAPI programming model using a DPC++ programming language.

In at least one embodiment, any application programming interface (API) described herein is compiled into one or more instructions, operations, or any other signal by a compiler, interpreter, or other software tool. In at least one embodiment, compilation includes generating one or more machine-executable instructions, operations, or other signals from source code. In at least one embodiment, an API compiled into one or more instructions, operations, or other signals, when performed, causes one or more processors, such as graphics processors, graphics cores, parallel processor, a CPU, or any other logic circuit further described herein to perform one or more computing operations.

It should be noted that, while example embodiments described herein may relate to a CUDA programming model, techniques described herein can be utilized with any suitable programming model, such HIP, oneAPI, and/or variations thereof.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

In at least one embodiment, one or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system comprising:
   one or more circuits to:
   transmit a data packet over a network channel to a destination;
   determine a channel latency between transmission of the data packet and receipt of an acknowledgement signal transmitted from the destination; and
   determine a size of a channel buffer based at least in part on the channel latency.
Clause 2. The system of clause 1, wherein the one or more circuits are to:
   send another transmission to the destination; and
   detect an error has occurred if more than a predetermined amount of time has elapsed and another acknowledgement signal has not been received in response to the other transmission, the predetermined amount of time to be based at least in part on the channel latency.
Clause 3. The system of clause 2, wherein the one or more circuits are to resend at least one data packet of the other transmission to the destination if the one or more circuits detect the error has occurred.
Clause 4. The system of clause 2, further comprising:
   first and second output ports, wherein the one or more circuits are to send the other transmission to the destination via the first output port, and resend at least one data packet of the other transmission to the destination using the second output port if the one or more circuits detect the error has occurred.
Clause 5. The system of clause 4, wherein the one or more circuits are to resend the at least one data packet of the other transmission to the destination using the second output port if the one or more circuits detect the error has occurred and after attempting to resend the least one data packet of the other transmission to the destination a predetermined number of times using the first output port.
Clause 6. The system of clause 1, wherein the one or more circuits are to:
   determine a time-out period for at least one timer based at least in part on the channel latency;
   start the at least one timer if the one or more circuits transmit a message to the destination; and
   detect an error has occurred if the at least one timer indicates the time-out period has elapsed and another acknowledgement signal has not been received in response to the message.
Clause 7. The system of clause 1, wherein the one or more circuits are to:
   determine a plurality of channel latencies corresponding to a plurality of network channels by transmitting another data packet over each of the plurality of network channels to the plurality of destinations and receiving a plurality of acknowledgement signals from the plurality of destinations;
   determine sizes of channel buffers corresponding to the plurality of network channels based at least in part on the plurality of channel latencies;
   send another transmission to a particular one of the plurality of destinations over a particular one of the plurality of network channels; and
   configure a different timer to detect an error has occurred if another acknowledgement signal is not received over the particular network channel in response to the other transmission within a time period based on one of the plurality of channel latencies corresponding to the particular network channel.
Clause 8. A method comprising:
   transmitting, from a source network device, a data packet over a network channel to a destination network device;
   determining, by the source network device, a channel latency between transmission of the data packet and receipt of an acknowledgement signal transmitted from the destination network device; and
   implementing, by the source network device, a channel buffer based at least in part on the channel latency.
Clause 9. The method of clause 8, further comprising:
   sending, by the source network device, another transmission to the destination network device; and
   implementing, by the source network device, a timer to detect an error if another acknowledgement signal is not received in response to the other transmission within a time period based at least in part on the channel latency.
Clause 10. The method of clause 9, further comprising:
   resending, by the source network device, at least one data packet of the other transmission to the destination network device if the error is detected.
Clause 11. The method of clause 9, wherein sending the other transmission to the destination network device comprises sending the other transmission to the destination network device via an output port, and the method further comprises:
   resending, by the source network device, at least one data packet of the other transmission to the destination network device using an alternate output port if the error is detected.
Clause 12. The method of clause 9, further comprising:
   attempting, by the source network device, to resend the least one data packet of the other transmission to the destination network device a predetermined number of times using an output port if the error is detected; and
   resending, by the source network device, the at least one data packet of the other transmission to the destination network device using an alternate output port if the error is detected the predetermined number of times.
Clause 13. The method of clause 8, further comprising determining a buffer size for the channel buffer based at least in part on the channel latency.
Clause 14. The method of clause 8 further comprising:
   determining a respective channel latency corresponding to each of a plurality of network channels by transmitting a data packet over each of the plurality of network channels to a plurality of destinations and receiving a plurality of acknowledgement signals from the plurality of destinations;
   implementing a respective channel buffer for each of the plurality of network channels based at least in part on the respective one of the plurality of channel latencies;
   sending another transmission to a particular one of the plurality of destinations over a particular one of the plurality of network channels; and
   implementing a timer to detect an error if another acknowledgement signal is not received over the particular network channel in response to the other transmission within a time period based on one of the plurality of channel latencies corresponding to the particular network channel.
Clause 15. A data center comprising:
   a plurality of computing devices comprising a source computing device and a destination computing device, the source computing device to be associated with a network controller; and
   a network connecting the source computing device to the destination computing device, the network comprising:
      a first network interconnection device intermediate the source computing device and a destination computing device; and
      a network channel connecting the source computing device to the first network interconnection device, the network controller to send a data packet over the network channel, the network controller to be associated with a latency timer to determine a channel latency between transmission of the data packet and receipt of an acknowledgement signal transmitted by the source computing device from the first network interconnection device, and the network controller to be associated with a channel buffer having a size based at least in part on the channel latency.
Clause 16. The data center of clause 15, wherein the source computing device is to send another transmission to the first network interconnection device, and source computing device further comprises:
   a watchdog timer to detect an error if another acknowledgement signal is not received in response to the other transmission by the source computing device within a time period based at least in part on the channel latency.
Clause 17. The data center of clause 16, wherein the source computing device is to use a different port to resend at least one data packet of the other transmission to the first network interconnection device when the error is detected.
Clause 18. The data center of clause 15 for use with a plurality of network interconnection devices wherein the first network interconnection device is coupled to a subsequent network interconnection device, and the first network interconnection device further comprises:
   an output port to transmit another data packet over another network channel from the first network interconnection device to the subsequent network interconnection device;
   another timer associated with the output port to determine another channel latency between transmission of the other data packet from the first network interconnection device and receipt of another acknowledgement signal transmitted from the subsequent interconnection device; and
   another channel buffer based at least in part on the other channel latency.
Clause 19. The data center of clause 18, wherein the first network interconnection device is to send another transmission to the subsequent network interconnection device, and the first network interconnection device further comprises:
   a watchdog timer to detect an error if another acknowledgement signal is not received in response to the other transmission by the first network interconnection device within a time period based at least in part on the other channel latency.
Clause 20. The data center of clause 19, wherein the first network interconnection device is to resend at least one data packet of the other transmission from the output port to the subsequent network interconnection device when the error is detected.
Clause 21. The data center of clause 19, wherein the first network interconnection device is to resend at least one data packet of the other transmission using an alternate output port when the error is detected.
Clause 22. The data center of clause 21, wherein the first network interconnection device is to resend at least one data packet of the other transmission using the alternate output port when the error is detected after attempting to resend the least one data packet of the other transmission to the subsequent network interconnection device a predetermined number of times using the output port.
Clause 23. The data center of clause 22, wherein the first network interconnection device is to resend at least one data packet of the other transmission to a different subsequent network interconnection device using an alternate output port when the error is detected.
Clause 24. The data center of clause 15 for use with a plurality of network channels to connect the first network interconnection device to a plurality of subsequent network interconnection devices, wherein the first network interconnection device comprises:
   the latency timer is to determine a plurality of channel latencies corresponding to the plurality of network channels by transmitting a data packet over each of the plurality of network channels to the plurality of subsequent network interconnection devices and receiving a plurality of acknowledgement signals from the plurality of subsequent network interconnection devices;
   implement a respective channel buffer for each of the plurality of network channels based at least in part on a respective one of the plurality of channel latencies;
   implement a respective watchdog timer for each of the plurality of network channels to detect an error if another acknowledgement signal is not received over the particular network channel in response to the other transmission within a time period based on one of the plurality of channel latencies corresponding to the particular network channel; and
   send another transmission to a particular one of the plurality of subsequent network interconnection devices over a particular one of the plurality of network channels using the respective watchdog timer for the particular one of the plurality of network channels.
Clause 25. The data center of clause 24, wherein a buffer size of the different channel buffer for each of the plurality of network channels is determined at least in part on a physical length of the respective network channel.

## Claims

1. A system comprising:
one or more circuits to:
transmit a data packet over a network channel to a destination;
determine a channel latency between transmission of the data packet and receipt of an acknowledgement signal transmitted from the destination; and
determine a size of a channel buffer based at least in part on the channel latency.

2. The system of claim 1, wherein the one or more circuits are to:
send another transmission to the destination; and
detect an error has occurred if more than a predetermined amount of time has elapsed and another acknowledgement signal has not been received in response to the other transmission, the predetermined amount of time to be based at least in part on the channel latency.

3. The system of claim 2, wherein the one or more circuits are to resend at least one data packet of the other transmission to the destination if the one or more circuits detect the error has occurred.

4. The system of claim 2, further comprising:
first and second output ports, wherein the one or more circuits are to send the other transmission to the destination via the first output port, and resend at least one data packet of the other transmission to the destination using the second output port if the one or more circuits detect the error has occurred, wherein the one or more circuits are to resend the at least one data packet of the other transmission to the destination using the second output port if the one or more circuits detect the error has occurred and after attempting to resend the least one data packet of the other transmission to the destination a predetermined number of times using the first output port.

5. The system of any preceding claim, wherein the one or more circuits are to:
determine a time-out period for at least one timer based at least in part on the channel latency;
start the at least one timer if the one or more circuits transmit a message to the destination; and
detect an error has occurred if the at least one timer indicates the time-out period has elapsed and another acknowledgement signal has not been received in response to the message.

6. The system of any preceding claim, wherein the one or more circuits are to:
determine a plurality of channel latencies corresponding to a plurality of network channels by transmitting another data packet over each of the plurality of network channels to the plurality of destinations and receiving a plurality of acknowledgement signals from the plurality of destinations;
determine sizes of channel buffers corresponding to the plurality of network channels based at least in part on the plurality of channel latencies;
send another transmission to a particular one of the plurality of destinations over a particular one of the plurality of network channels; and
configure a different timer to detect an error has occurred if another acknowledgement signal is not received over the particular network channel in response to the other transmission within a time period based on one of the plurality of channel latencies corresponding to the particular network channel.

7. A method comprising:
transmitting, from a source network device, a data packet over a network channel to a destination network device;
determining, by the source network device, a channel latency between transmission of the data packet and receipt of an acknowledgement signal transmitted from the destination network device; and
implementing, by the source network device, a channel buffer based at least in part on the channel latency.

8. A data center comprising:
a plurality of computing devices comprising a source computing device and a destination computing device, the source computing device to be associated with a network controller; and
a network connecting the source computing device to the destination computing device, the network comprising:
a first network interconnection device intermediate the source computing device and a destination computing device; and
a network channel connecting the source computing device to the first network interconnection device, the network controller to send a data packet over the network channel, the network controller to be associated with a latency timer to determine a channel latency between transmission of the data packet and receipt of an acknowledgement signal transmitted by the source computing device from the first network interconnection device, and the network controller to be associated with a channel buffer having a size based at least in part on the channel latency.

9. The data center of claim 8, wherein the source computing device is to send another transmission to the first network interconnection device, and source computing device further comprises:
a watchdog timer to detect an error if another acknowledgement signal is not received in response to the other transmission by the source computing device within a time period based at least in part on the channel latency.

10. The data center of claim 9, wherein the source computing device is to use a different port to resend at least one data packet of the other transmission to the first network interconnection device when the error is detected.

11. The data center of claim 8 for use with a plurality of network interconnection devices wherein the first network interconnection device is coupled to a subsequent network interconnection device, and the first network interconnection device further comprises:
an output port to transmit another data packet over another network channel from the first network interconnection device to the subsequent network interconnection device;
another timer associated with the output port to determine another channel latency between transmission of the other data packet from the first network interconnection device and receipt of another acknowledgement signal transmitted from the subsequent interconnection device; and
another channel buffer based at least in part on the other channel latency.

12. The data center of claim 11, wherein the first network interconnection device is to send another transmission to the subsequent network interconnection device, and the first network interconnection device further comprises:
a watchdog timer to detect an error if another acknowledgement signal is not received in response to the other transmission by the first network interconnection device within a time period based at least in part on the other channel latency.

13. The data center of claim 12, wherein the first network interconnection device is to resend at least one data packet of the other transmission from the output port to the subsequent network interconnection device when the error is detected.

14. The data center of claim 12, wherein the first network interconnection device is to resend at least one data packet of the other transmission using an alternate output port when the error is detected, wherein the first network interconnection device is to resend at least one data packet of the other transmission using the alternate output port when the error is detected after attempting to resend the least one data packet of the other transmission to the subsequent network interconnection device a predetermined number of times using the output port, wherein the first network interconnection device is to resend at least one data packet of the other transmission to a different subsequent network interconnection device using an alternate output port when the error is detected.

15. The data center of any of claims 8-14 for use with a plurality of network channels to connect the first network interconnection device to a plurality of subsequent network interconnection devices, wherein the first network interconnection device comprises:
the latency timer is to determine a plurality of channel latencies corresponding to the plurality of network channels by transmitting a data packet over each of the plurality of network channels to the plurality of subsequent network interconnection devices and receiving a plurality of acknowledgement signals from the plurality of subsequent network interconnection devices;
implement a respective channel buffer for each of the plurality of network channels based at least in part on a respective one of the plurality of channel latencies;
implement a respective watchdog timer for each of the plurality of network channels to detect an error if another acknowledgement signal is not received over the particular network channel in response to the other transmission within a time period based on one of the plurality of channel latencies corresponding to the particular network channel; and
send another transmission to a particular one of the plurality of subsequent network interconnection devices over a particular one of the plurality of network channels using the respective watchdog timer for the particular one of the plurality of network channels, wherein a buffer size of the different channel buffer for each of the plurality of network channels is determined at least in part on a physical length of the respective network channel.
